(19) Europäisches Patentamt
European Patent Office
Office européen des brevets

(11) EP 2 352 123 A1

(12) EUROPEAN PATENT APPLICATION
published in accordance with Art. 153(4) EPC

(43) Date of publication:
03.08.2011 Bulletin 2011/31

(51) Int Cl.:
G06T 7/00 (2006.01)          G06T 1/00 (2006.01)
H04N 1/46 (2006.01)          H04N 1/60 (2006.01)
H04N 9/64 (2006.01)

(21) Application number: 09827459.0

(22) Date of filing: 23.10.2009

(86) International application number:
PCT/JP2009/068272

(87) International publication number:
WO 2010/058678 (27.05.2010 Gazette 2010/21)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 19.11.2008 JP 2008295786

(71) Applicant: Sharp Kabushiki Kaisha
Osaka-shi, Osaka 545-8522 (JP)

(72) Inventors:
• HAGIWARA, Yasufumi
Osaka-shi
Osaka 545-8522 (JP)

• KOYAMA, Daisuke
Osaka-shi
Osaka 545-8522 (JP)
• OTSUKA, Koji
Osaka-shi
Osaka 545-8522 (JP)
• MANBA, Osamu
Osaka-shi
Osaka 545-8522 (JP)

(74) Representative: Müller - Hoffmann & Partner
Patentanwälte
Innere Wiener Strasse 17
81667 München (DE)

(54) SPECIFIED COLOR AREA DEMARCATION CIRCUIT, DETECTION CIRCUIT, AND IMAGE PROCESSING APPARATUS USING SAME

(57) A specified color area demarcation circuit 6 has a luminance information (histogram) acquisition unit 3 for multiple pixels and a luminance information (histogram) analysis unit 5 for the multiple pixels. The luminance information (histogram) acquisition unit 3 for the multiple pixels acquires luminance information of the multiple pixels in an input image. In order to acquire the luminance information of the multiple pixels, the luminance information (histogram) acquisition unit 3 creates, for example, a histogram of the luminance indicating frequencies. As an example of the histogram, 0 to 255 gray levels in an image are divided into thirty-two (0-7, 8-15, ... 240-247, 247-255) ranges, and the number of pixels present in each of the divided gray levels (luminance Y) is counted. In order to extract the feature value of the luminance information of the multiple pixels in the input image, the luminance information analysis unit 5 analyzes, for example, the histogram of the luminance values of the multiple pixels to extract the feature value representing a feature of the histogram. On the basis of the feature value, the luminance information analysis unit 5 obtains the coefficient for demarcating the specified color area. Thereby, it is possible to display an image of the specified color area with high precision.

FIG. 4

**Description**

TECHNICAL FIELD

The present invention relates to an image processing technique, and particularly to an image processing technique of image processing of a specified color in a favorable condition.

BACKGROUND ART

It is important to display a human skin color in a favorable condition on a digital camera, a digital television receiving device, and the like. Patent Document 1 mentioned below describes a method of detecting a skin color area while the area to be judged as being the skin color is changed based on the luminance of each pixel by using a table in the second embodiment (in the paragraphs [0113] to [0116] of Patent Document 1).

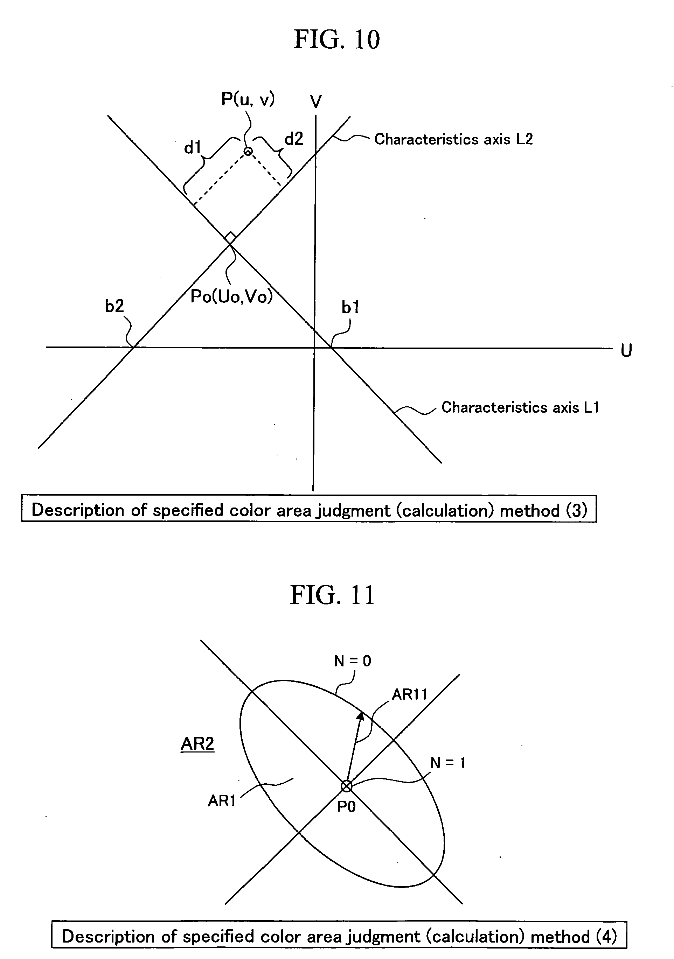

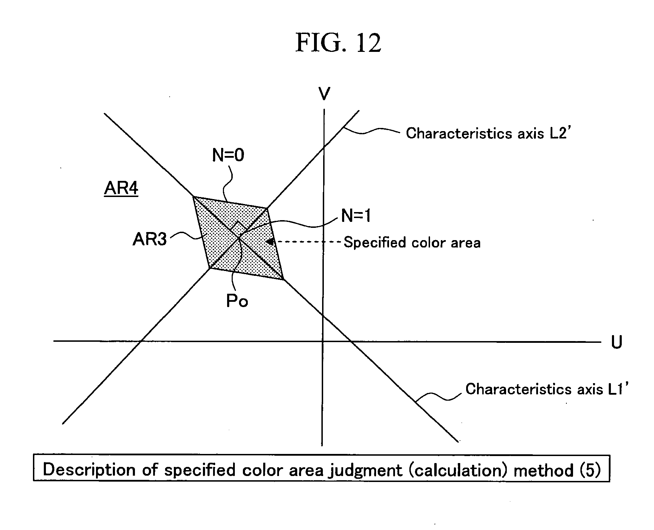

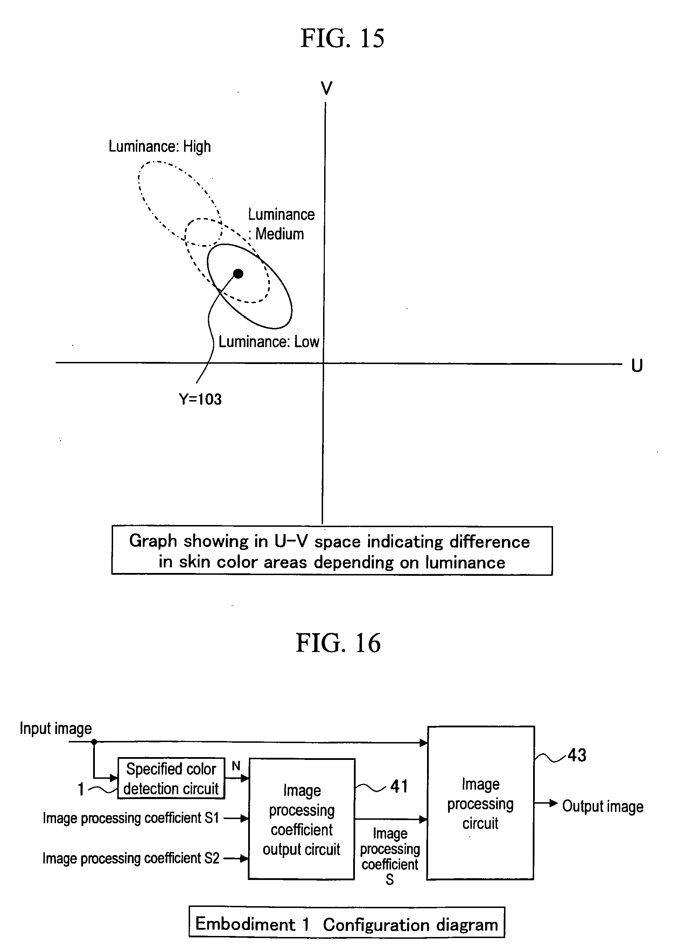

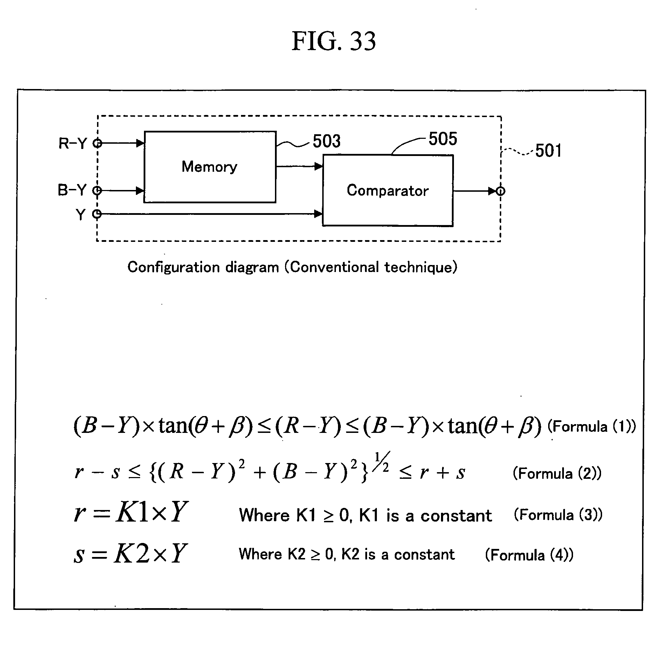

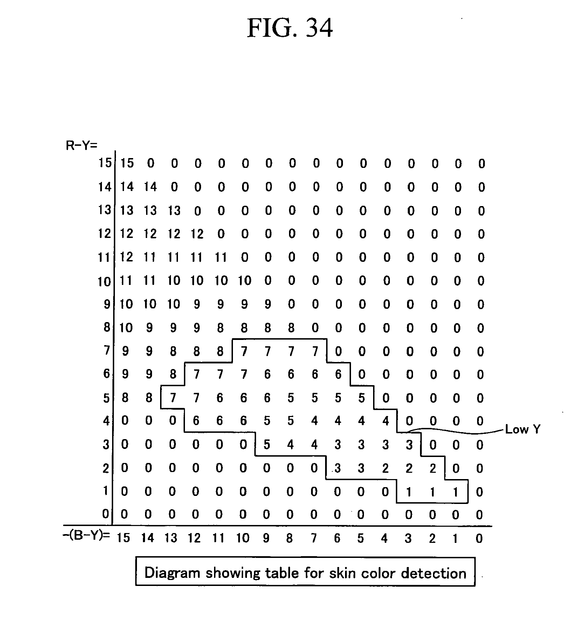

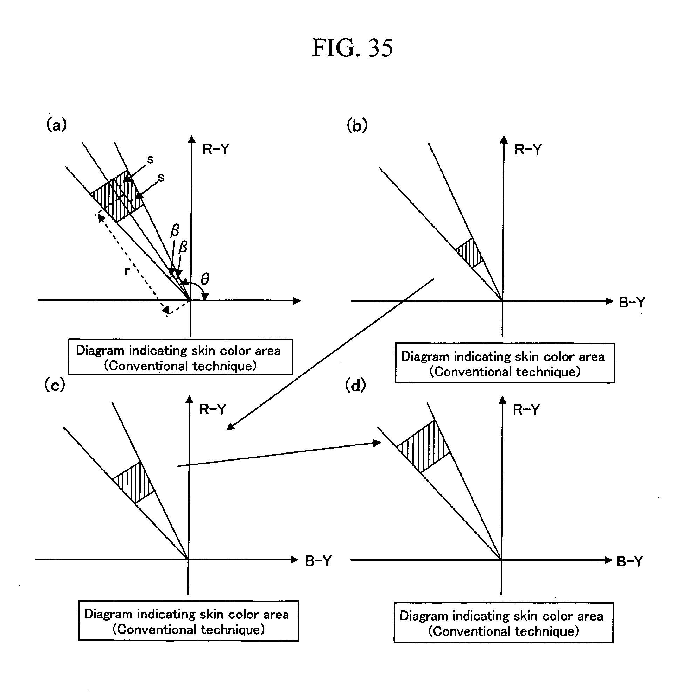

As shown in Fig. 11 of Patent Document 1, the skin color area is an area defined by a hue saturation and a color signal saturation, and is indicated by Formulas 1 and 2 of Patent Document 1. Also, it is described that the skin color area indicated by Formulas 1 and 2 of Patent Document 1 similarly changes according to the level of a luminance signal as shown by Formulas 3 and 4 of Patent Document 1 (Formulas 1 to 4 of Patent Document 1 are shown in Formulas 1 to 4 of Fig. 33 of this application). In addition, as the level of the luminance signal increases, the skin color area has a greater color signal saturation as shown in Figs. 12, 13, and 14 of Patent Document 1 (Figs. 11 to 14 of Patent Document 1 are collectively shown in Fig. 35 of this application). Fig. 33 is a diagram showing a skin color detection circuit (Fig. 10 of Patent Document 1) for detecting a skin color area in the second embodiment of Patent Document 1. A conventional skin color detection circuit 501 shown in Fig. 33 includes a memory 503 and a comparator 505. The memory 503 receives R-Y and B-Y signals as inputs, the comparator 505 compares an output from the memory 503 with Y, and then a skin color detection signal is outputted. The memory 503 stores a table shown in Fig. 34 for detecting a skin color (Fig. 15 in Patent Document 1), and numbers are written in only a specific area of the table (the rest of the area are written with "0"). By use of the table shown in Fig. 34 for detecting a skin color, an area satisfying Formulas 1, 2, 3, or 4 from above shown in Fig. 33 can be detected. In this table, an area having a predetermined level of signal in two-dimensional plane defined by the -(B-Y) and R-Y axes is considered to be a skin color area.

For example, in the skin color detection processing in which an area having a luminance signal Y in the range from 1/2 to 1/8 is judged to be a skin color, when a signal of level 14 is inputted from an input terminal Y of luminance, the area of 7 to 1 in the table is judged to be skin color area and "1" is outputted. That is to say, the range indicated by the area of low luminance Y (low Y) in Fig. 34 is considered to be a skin color area with low luminance. Also, it is seen that the skin color area changes as the luminance changes.

Parts (a) to (d) of Fig. 35 are diagrams showing how the skin color area changes in the (B-Y)-(R-Y) plane in the conventional technique; Part (a) of Fig. 35 is a diagram showing the definitions of the symbols and the like in the formulas; and Parts (b) to (d) of Fig. 35 are diagrams showing how a skin color area depending on the luminance changes. As shown in Part (a) of Fig. 35, in the (B-Y)-(R-Y) plane, $\theta$ is an angle of the central axis of the skin color area extending from the origin of the skin color area; $\beta$ is an angle between the central axis of the skin color area and the boundary of the skin color area; $\gamma$ is a distance between the origin and the center of the skin color area; and s is a distance along the central axis between the center of the skin color area and the boundary of the skin color area. These parameters are used in Formulas (1) to (4). A skin color area can be demarcated by these parameters. The memory 503 in Fig. 33 stores the table shown in Fig. 34. Based on the change of the luminance value Y, a skin color area can be changed by the luminance from Part (b) of Fig. 35 for a case of low luminance Y to Part (c) of Fig. 35 for a case of medium luminance Y and further to Part (d) of Fig. 35 for a case of high luminance Y.

Patent Document 1
Japanese Patent Application Publication No. Hei 11-146405, Video Signal Processor and Color Video Camera Using the Same

DISCLOSURE OF THE INVENTION

PROBLEMS TO BE SOLVED BY THE INVENTION

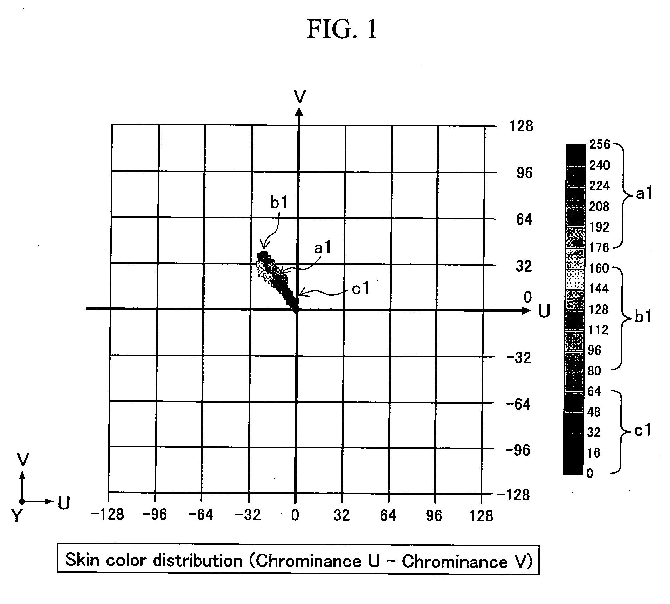

Figs. 1 to 3 are graphs showing the distribution of a skin color area in the U-V plane, the V-Y plane, and the U-Y plane (Y denotes luminance, and U and V each denote a chrominance). On the right side of each graph, pixels in a skin color area are shown in the order of c, b, a, which is the ascending order of Y (luminance). As shown in Fig. 1, in a human skin color area, it can be seen that the U-V characteristics has such dependence on the luminance that the distribution once moves away from the origin (c1-b1) then approaches the origin (b1-a1), and the size of the skin color area changes depending on the luminance.

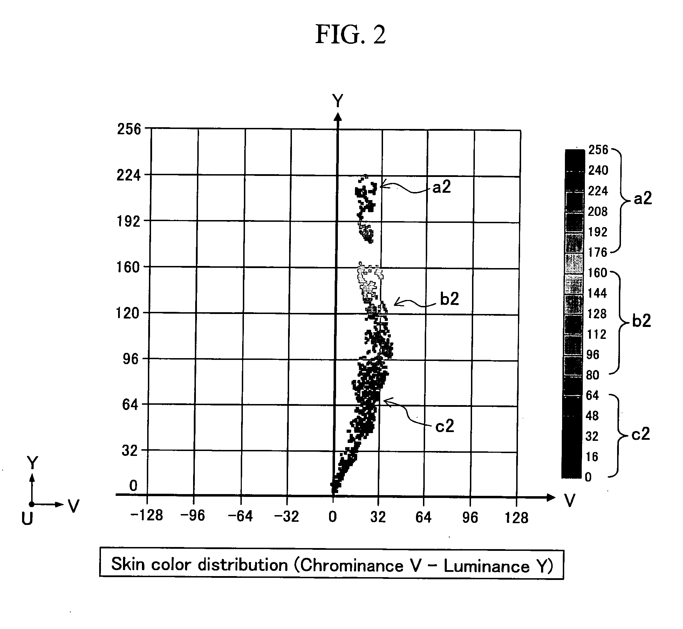

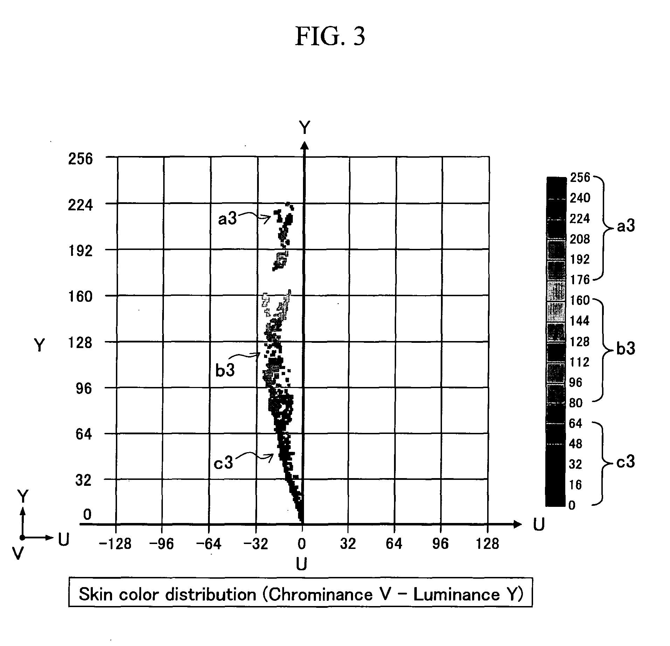

Also in the V-Y plane shown in Fig. 2, it can be seen that when the magnitude of Y (luminance) increases in the order of c2-b2-a2, the magnitude of V (chrominance) tends to once increase then decrease, and the size of the skin color area changes depending on the luminance. Also in the U-Y plane shown in Fig. 3, similar observation can be made (c3-b3-a3).

As described above, it has been found that the skin color area has the luminance dependence, and that the luminance dependence is not a linear dependence. The image processing technique according to the conventional technique has a problem of incapability of dealing with the luminance dependence of such a skin color area.

It is an object of the present invention to provide a technique capable of demarcating a specified color area including a skin color area with high precision in accordance with luminance change.

MEANS FOR SOLVING THE PROBLEMS

The image processing technique according to the present invention is characterized in that luminance distribution information of multiple pixels in an image is obtained, and a specified color area is judged from the information. The specified color area is an area of approximate colors around a certain specified color which is in the color space.

One aspect of the present invention provides a specified color area definition circuit characterized by including: a luminance information acquisition unit configured to acquire luminance distribution information of a plurality of pixels included in an input image; and a luminance information analysis unit configured to obtain a feature value according to the luminance information of the plurality of pixels based on the luminance information of the plurality of pixels acquired by the luminance information acquisition unit, and to obtain a coefficient for demarcating a specified color area in a color space of the input image according to luminance based on the feature value.

Further, the present invention may be a specified color detection circuit characterized by including a specified color detection unit configured to determine and output an approximation by using the specified color area demarcated by the coefficients obtained by the above-described luminance information analysis unit. The approximation is 0 on and outside the boundary demarcating the specified color area, and is closer to 1 at a location closer to the center in the area. At a certain point in the color space, the approximation can be uniquely obtained.

Also, the present invention may be an image processing apparatus characterized by including the above-described specified color detection circuit; an image processing coefficient output circuit configured to receive the approximation, as an input, which is an output of the specified color detection circuit so as to apply different coefficients for image processing between the specified color and non-specified color; and an image processing circuit configured to output an output image signal based on image processing coefficients which are outputs of the image processing coefficient output circuit, and an input image signal.

Another aspect of the present invention provides a demarcation method for a specified color area characterized by including: a luminance information acquisition step of acquiring luminance distribution information of a plurality of pixels contained in an input image; and a luminance information analysis step of obtaining a feature value according to the luminance information of the plurality of pixels based on the luminance information of the plurality of pixels acquired in the luminance information acquisition step, and of obtaining a coefficient for demarcating a specified color area in a color space of the input image according to luminance based on the feature value.

Furthermore, the present invention may be a specified color detection method characterized by including a specified color detection step of obtaining and outputting an approximation using the specified color area demarcated by the coefficients obtained by the above-described luminance information analysis step.

The present invention may be a program for causing a computer to execute the above-described method, or may be a computer-readable recording medium to record the program. The program may be acquired by a transmission medium such as the Internet.

The present description includes the content in its entirety described in the description and/or the drawings of Japanese Patent Application No. 2008-295786 which is the base of the priority of this application.

EFFECT OF THE INVENTION

The present invention makes it possible to appropriately demarcate a specified color area in response to a change in the skin color area depending on luminance, and thus has an advantage of reducing erroneous detection of a color other than the specified color.

BRIEF DESCRIPTION OF THE DRAWINGS

Fig. 1 is a graph showing a distribution of a skin color area on a U-V plane.

Fig. 2 is a graph showing a distribution of a skin color area on a V-Y plane.

Fig. 3 is a graph showing a distribution of a skin color area on a U-Y plane.

Fig. 4 is a diagram showing an exemplary configuration of a specified color detection circuit in an image processing apparatus according to an embodiment of the present invention.

Fig. 5 is a graph showing an exemplary histogram of luminance indicating a frequency in an image processing apparatus according to the embodiment of the present invention.

Fig. 6 is a table showing an exemplary configuration of a coefficient table.

Fig. 7 is a graph showing an exemplary skin color area judgment (calculation) method.

Fig. 8 is a diagram showing a relationship between the major and minor diameters of an ellipse.

Fig. 9 is a graph showing a possible range of a characteristics axis L1 and a characteristics axis L2 on the U-V plane.

Fig. 10 is a graph in which distances from a point P(u, v) where an input signal is plotted on the UV plane are defined in the following steps.

Fig. 11 is a graph showing a concentric elliptic specified color area where the maximum value N=1 is taken at a point P0, and N=0 is taken on the boundary.

Fig. 12 is a graph showing an example of demarcating a specified color area using a rhombus.

Fig. 13 is a graph showing an example of demarcating a specified color area using a rectangle.

Fig. 14 is a diagram showing exemplary 3×3 skin color images (the 1st to 9th pixels) where the 1st pixel is a noise pixel with only Y (luminance) significantly different.

Fig. 15 is a graph showing in the U-V space a difference in the skin color areas depending on the luminance.

Fig. 16 is a diagram showing a configuration of an entire image processing circuit including a specified color detection circuit 1 shown in Fig. 4.

Fig. 17 is a graph showing how image processing coefficients are synthesized linearly according to a value of a specified color approximation N which is an output of the specified color detection circuit.

Fig. 18 is a diagram showing an exemplary configuration of an image processing circuit according to a second embodiment of the present invention.

Fig. 19 is a diagram showing an exemplary configuration of a specified color detection circuit used for image processing according to a third embodiment of the present invention.

Fig. 20 is a diagram showing the schematic operation by a specified color coefficient predicting unit.

Fig. 21 is a diagram showing a prediction flow of a mean luminance Ym from the (N-4)th frame to the Nth frame.

Fig. 22 is a diagram showing an exemplary configuration of a first specified color detection circuit in an image processing circuit according to a fourth embodiment of the present invention.

Fig. 23 is a diagram showing an exemplary configuration of a second specified color detection circuit in an image processing circuit according to the fourth embodiment of the present invention.

Fig. 24 is a diagram showing an image of synthesis coefficients of a specified color area of the (N-2)th frame and the (N-1)th frame in a specified color coefficient synthesis unit, and outputting the synthesized coefficients as specified area coefficients of the Nth frame to the specified color detection unit.

Fig. 25 is a diagram showing an image of synthesis coefficients of a specified color area of the (N-2)th frame and the (N-1)th frame in a specified color coefficient synthesis unit, and outputting the synthesized coefficients as specified area coefficients of the Nth frame to the specified color detection unit.

Fig. 26 is a graph showing how an area is demarcated so that both specified color areas corresponding to the (N-2)th frame and the (N-1)th frame can be included in the area.

Fig. 27 is a diagram showing an exemplary configuration of a display apparatus using the specified color detection unit utilizing the image processing technique according to the present embodiment.

Fig. 28 is a diagram showing an exemplary application of the image processing technique according to the present embodiment to a mobile terminal.

Fig. 29 is a flowchart diagram showing an overall flow of the image processing according to the present embodiment.

Fig. 30 is a flowchart diagram showing the flow of a first processing of the processing shown in Fig. 29.

Fig. 31 is a flowchart diagram showing the flow of a second processing of the processing shown in Fig. 29.

Fig. 32 is a flowchart diagram showing the flow of a second processing of the processing shown in Fig. 29.

Fig. 33 is a diagram showing an exemplary configuration of a conventional skin color detection circuit.

Fig. 34 is a diagram showing an exemplary configuration of a table for skin color detection.

Parts (a) to (d) of Fig. 35 are graphs showing how the skin color area changes in the (B-Y)-(R-Y) plane in the conventional technique.

EXPLANATION OF REFERENCE NUMERALS

| | |
|---|---|
| 1 | Specified color detection circuit |
| 3 | Luminance information acquisition unit |
| 5 | Luminance information analysis unit |
| 5a | Luminance information calculation unit |
| 5b | Specified color coefficient prediction unit |
| 6 | Specified color area demarcation circuit |
| 7 | Specified color detection unit |
| 7a, 7b | Specified color detection unit |
| 41 | Image processing coefficient output circuit |
| 43 | Image processing circuit |
| 51 | Delay circuit |
| 61 | Specified color coefficient synthesis unit |
| 63 | Specified color coefficient adjusting unit |
| 65 | Specified color approximation N synthesis unit |

BEST MODE FOR CARRYING OUT THE INVENTION

Although the following describes an example where the skin color is the specified, another color is applicable as long as distribution of the color area changes depending on the luminance. In this sense, the term, specified color is used.

Hereinafter, an image display technique according to an embodiment of the present invention is described with reference to the drawings.

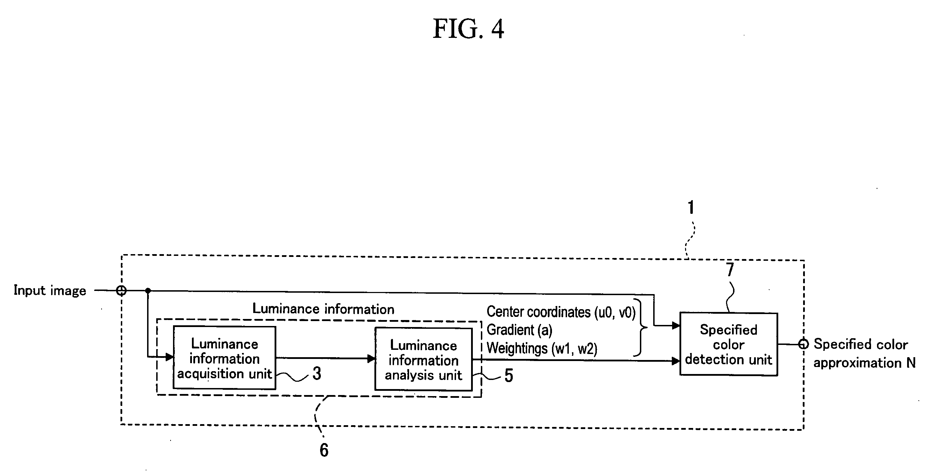

Fig. 4 is diagram showing an exemplary configuration of a specified color detection circuit in an image processing apparatus according to the present embodiment. As shown in Fig. 4, a specified color detection circuit 1 according to the present embodiment includes a luminance information (histogram) acquisition unit 3 for multiple pixels, a luminance information (histogram) analysis unit 5 for analyzing luminance information of multiple pixels, and a specified color (skin color) detection unit 7. The luminance information analysis unit 5 for analyzing luminance information of multiple pixels and the specified color detection unit 7 form a specified color area demarcation circuit 6 for demarcating a specified color area. The specified color area demarcation circuit 6 acquires an input image by the luminance information acquisition unit 3, obtains a feature value by performing analysis based on the luminance information, and then outputs coefficients (parameters) for demarcating the specified color area.

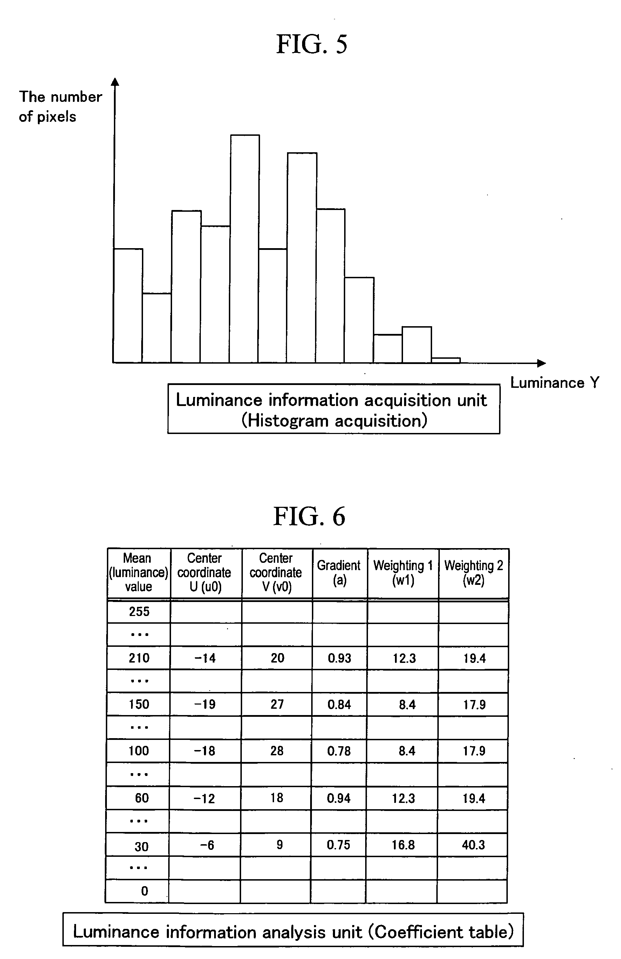

More particularly, the luminance information (histogram) acquisition unit 3 for multiple pixels performs processing for acquiring information about the luminance of multiple pixels in an input image. In order to acquire the information about the luminance of multiple pixels, the luminance information (histogram) acquisition unit 3 creates, for example, a histogram of the luminance indicating a frequency as shown in Fig. 5. As an example of the histogram, 0 to 255 gray levels in an image is divided into thirty-two (0-7, 8-15, ... 240-247, 247-255) ranges, and the number of pixels which are present in each of the divided gray levels (luminance Y) is counted. In order to extract the feature value of the information about the luminance of the multiple pixels in the input image, the luminance information analysis unit 5 analyzes, for example, the histogram about the luminance values of the multiple pixels to extract the feature value representing the feature of the histogram.

That is to say, from the information of the histogram obtained by the luminance information acquisition unit 3, the luminance information analysis unit 5 obtains at least one of the mean (luminance) value, the median (luminance) value, the mode (luminance) value, the variance, the standard deviation, the minimum, the maximum, the kurtosis, the skewness, the geometric mean, the harmonic mean, the weighted mean, and the like in the histogram. By referring to a coefficient table (feature value) shown in Fig. 6 by use of the obtained values, the luminance information analysis unit 5 outputs to the specified color detection unit 7 the coefficients indicating the center coordinate U ($u0$), the center coordinate V ($v0$), a gradient ($a$), a first weighting ($w1$), and a second weighting ($w2$) of the skin color area (which is assumed to be an ellipse herein) depending on the luminance. The coefficient table (feature value) stores the coefficients for demarcating an ellipse in the color space, for example, for the mean (luminance) value. The center coordinate U ($u0$), the center coordinate V ($v0$), the gradient ($a$), the first weighting ($w1$), and the second weighting ($w2$) of the coefficients may be calculated for the mean value of the multiple pixels of the input image, or a skin color distribution may be extracted to appropriately determine the center coordinates, the gradient, and the weighting (area size) in the color space by using parameter fitting. Alternatively, a line may be obtained from the skin color distribution by using the least square method, and the center coordinates, the gradient, and the weightings may be obtained so that an area with the center coordinates (center) as the intersection point between the line and another line perpendicular to the line includes the entire skin color distribution area. These values may be stored in, for example, a memory. The specified color detection unit 7 identifies a skin color area based on the coefficient obtained from the luminance information analysis unit 5. The judgment method (calculation method) for an area is described later. Now, weighting for a distance from the center of the skin color area is performed (the center of the ellipse has the specified color approximation 1, i.e., the closest to the specified color, and the circumference of the ellipse has the specified color approximation 0).

In short, the approximation is designed to be 0 on and outside the boundary demarcating the specified color area and to become closer to 1 at a location closer to the center in the area (the center of the specified color area is a point having a color closest to the specified color). At a certain point in the color space, the approximation can be uniquely obtained.

Although the YUV space has been used as the color space in the embodiment, other color spaces (such as L*u*v*, L*a*b*, HSV, HLS, YIQ, YCbCr, YPbPr) may be used. Hereinafter, an exemplary embodiment is described using the YUV as the color space.

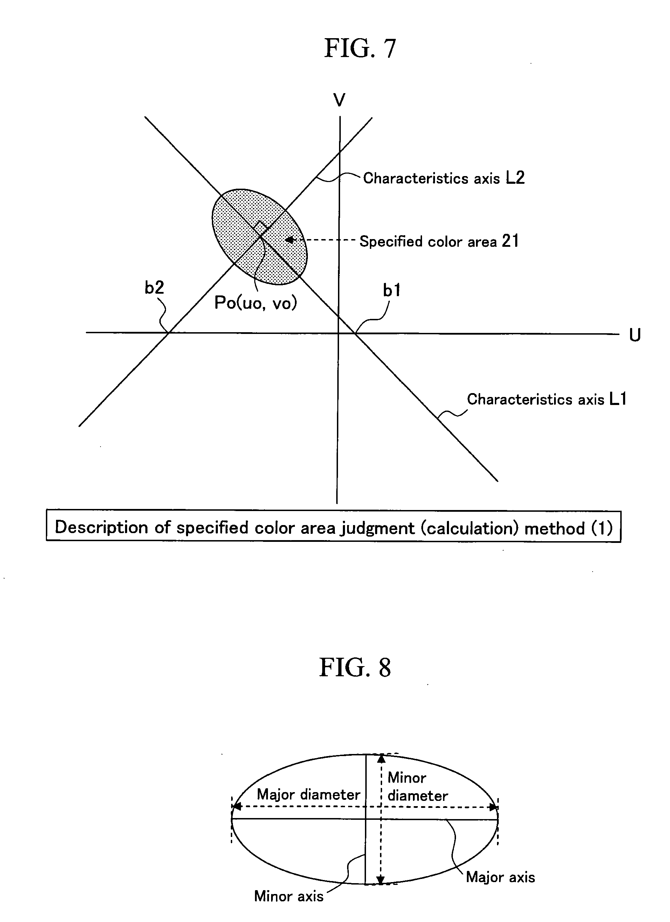

Next, the specified color area judgment (calculation) method by the specified color detection unit is described in detail. Fig. 8 is a diagram showing some definitions related to an ellipse. As shown in Fig. 8, a major axis is defined as a line segment passing through two foci inside the ellipse. The length of the major axis is called a major diameter. At intersections of the major axis and the ellipse, a difference between the distances from the two foci becomes maximum. Also, a minor axis is defined as a line segment of a perpendicular bisector of the major axis inside the ellipse.

Fig. 7 is a graph showing an exemplary specified color area judgment (calculation) method. As shown in Fig. 7, in a specified color area 21 indicated by an ellipse in the U-V plane, two axes (hereinafter referred to as "characteristics axes") showing the direction of the specified color area are defined by the formulas below. The major axis is denoted by the characteristics axis L1, and the minor axis is denoted by the characteristics axis L2.

[Formula 1]

$$V = a_1 U + b_1 \quad \ldots \text{characteristics axis L1} \quad (1)$$

[Formula 2]

$$U = -a_2 V + b_2 \quad \ldots \text{characteristics axis L2} \quad (2)$$

Modifying Formula 2 gives Formula 3.

$$V = -\frac{1}{a_2} U - b_2 \qquad (3)$$

When two characteristics axes L1 and L2 are defined to be perpendicular to each other, the following Formula 4 holds as long as neither a1 nor a2 is 0.

[Formula 4]

$$a_1 \cdot -\frac{1}{a_2} U = -1 \qquad (4)$$

Therefore, the gradients of the two characteristics axes can be expressed by using a single variable a as shown in the following Formula 5.

[Formula 5]

$$a_1 = a_2 = a \qquad \text{Equation 1'} \quad V = aU + b_1 \ldots \text{characteristics axis L1}$$

$$\text{Equation 2'} \quad U = -aV + b_2 \ldots \text{characteristics axis L2} \quad (5)$$

In the case where a = 0, the characteristics axes are as shown in the following Formula 6, and thus the characteristics axes can be verified to be perpendicular to each other even in this case.

[Formula 6]

$$V = b_1, \ U = b_2 \qquad\qquad (6)$$

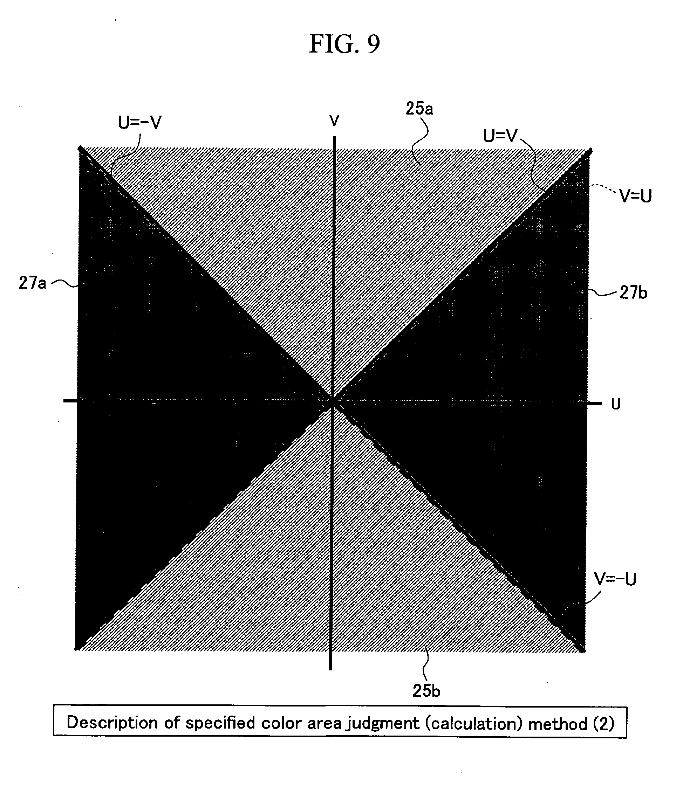

In the case where a possible range of the value for a is defined as $-1 \leq a < 1$, as shown in Fig. 9, the characteristics axis L1 can take a range lying between V = U and V = U (ranges 27a and 27b). On the other hand, the characteristics axis L2 can take a range lying between U = V and U = -V (ranges 25a and 25b) where the solid lines are included in the range, and the dashed lines are not included in the range. With this scheme, a specified color range (ellipse) with an arbitrary gradient can be defined. As shown in Fig. 7, when the center point (= the intersection of the characteristics axes) of the specified color range of the skin color is set to be a specified color P0 having coordinates of (u0, v0), intercepts b1, b2 of the equations defining the characteristics axes each can be obtained by the following Formula 7.

[Formula 7]

$$b_1 = v_0 - a\,u_0 \qquad \text{Equation 1'} \quad V = a(U - u_0) + v_0 \ldots \text{characteristics axis L1}$$

$$b_2 = u_0 + av_0 \qquad \text{Equation 2'} \quad U = -a(V - v_0) + u_0 \ldots \text{characteristics axis L2}$$

$$(7)$$

Consequently, the characteristics axes L1 and L2 can be set by three parameters of the coordinates u0, v0 of the specified color P0, and the gradient a. The specified color area 21 shown in Fig. 7 defines the distance from the specified color P0 to the point P(u, v) where an input signal is plotted on the UV plane as shown in Fig. 10 in the following steps. First, distances d1 and d2 from the point P to the characteristics axis L1 and to the characteristics axis L2, respectively are calculated by the following formulas 8, 9. The U-intercepts are b1 and b2.

[Formula 8]

$$d_1 = \frac{|v - au - b_1|}{\sqrt{1 + a^2}}$$

$$= \frac{|v - au - (v_0 - au_0)|}{\sqrt{1 + a^2}}$$

$$= \frac{|v - v_0 - a(u - u_0)|}{\sqrt{1 + a^2}} \qquad (8)$$

[Formula 9]

$$d_2 = \frac{|u + av - b_2|}{\sqrt{1 + a^2}}$$

$$= \frac{|u + av - (u_0 + av_0)|}{\sqrt{1 + a^2}}$$

$$= \frac{|u - u_0 + a(v - v_0)|}{\sqrt{1 + a^2}} \qquad (9)$$

Then the value D obtained by multiplying d1 and d2 by weightings w1 and w2, respectively and adding them together is defined as the distance from the center P0 to the point P.

[Formula 10]

$$D = \sqrt{(w_1 d_1)^2 + (w_2 d_2)^2} \qquad (10)$$

Further, the specified color approximation N (output N of the specified color detection circuit 1 in Fig. 4) is defined by the following Formula 11:

[Formula 11]

$$N = \max(1 - D, 0) \qquad (11)$$

Thereby, as shown in Fig. 11, a concentric elliptic specified color area (AR1) where the maximum value N=1 is achieved at the point P0, and N=0 is achieved on the boundary can be obtained. The outside area AR2 is a non-specified color area. The interior portion of the boundary where N=0 out of the specified color area AR1 can be defined as the specified color range. The weighting coefficients w1, w2 have a function of transforming the specified color range, and the greater the values of the coefficients, the smaller the specified color range (see the arrow AR11). Also because the ratio of w1 to w2 is the ratio of the major axis to the minor axis of the ellipse as shown in Fig. 8, the specified color range will be a circle when the same values are set to w1 and w2.

Although the specified color area is demarcated by an ellipse in the above, Formula 10 may be simplified so that a specified color area AR3 and its outside area AR4 can be demarcated also by using the rhombus defined by Formula 12-1 (see Fig. 12). The intersection of the diagonals of the rhombus is defined as P0, and the lines including the diagonals are defined as the characteristics axes L1' and L2'. When the same values are set to w1 and w2, the specified color range will be a square.

[Formula 12-1]

$$D = w_1 d_1 + w_2 d_2 \qquad (12\text{-}1)$$

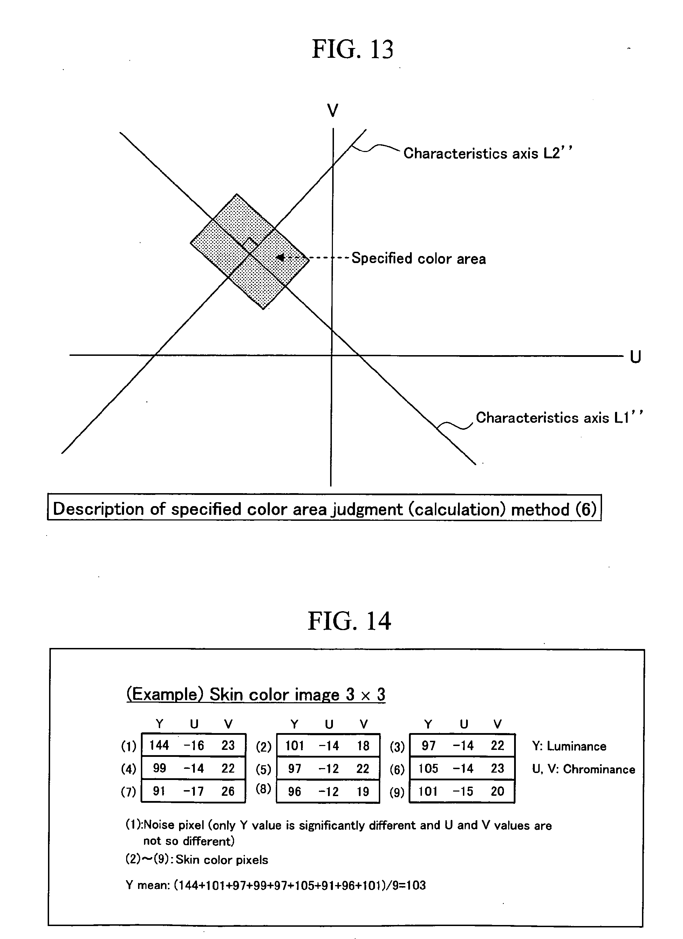

The skin color area can be demarcated also by using the rectangle defined by formula 12-2, (refer to Fig. 13). The skin color area can be demarcated even using the rectangle defined by Formula 12-2 (see Fig. 13).

[Formula 12-2]

$$D = \max(w_1 d_1,\ w_2 d_2) \qquad (12\text{-}2)$$

In the following, the case where the specified color area is approximately demarcated by an ellipse is described as an example. Although use of an ellipse enables more precise approximation, approximation of the specified color area by a rectangle or a rhombus is easier and advantageous for simple processing.

Although the lines L1 and L2 are used as the characteristics axes in the present embodiment, multiple axes may be used to define an arbitrary polygon as a specified color area. Also, in the embodiment, for example, in the case of an ellipse, the weightings w1, w2 show the lengths of the major and minor diameters, and the ellipse is symmetric about the minor and major axes, and respective midpoints of the axes are the center of the ellipse. However, the ellipse may be non-symmetric about the minor and major axes, and the respective midpoints of the axes may not be the center of the ellipse. Similarly, a quadrilateral may be used instead of a rhombus.

Fig. 14 is a diagram showing the characteristics of a skin color image used to compare the present invention with the conventional technique. As shown in Fig. 14, the image is a 3×3 skin color image including a pixel (1) to a pixel (9). The pixel (1) is a noise pixel with only Y value significantly different from that of the other pixels (2) to (9), and the UV values are almost the same as those of the other pixels where the mean value of Y (luminance) is 103.

Fig. 15 is a graph showing in the U-V space a difference in the skin color areas depending on Y (luminance). The elliptic areas each indicating a skin color area are placed from a position near the origin in the increasing direction of V and the decreasing direction of U, in the order of low luminance, medium luminance, and high luminance.

The skin color area for the luminance (144) of the pixel (1) in Fig. 14 corresponds to the area with high luminance in Fig. 15, and the skin color areas for luminance (91 to 105) of the pixels (2) to (9) correspond to the area with medium luminance. The skin color area for the mean value luminance (103) of the pixels (1) to (9) corresponds to the area with medium luminance. Then U and V (both are chrominances) of the pixels (1) to (9) exist inside the skin color area of medium luminance and outside the skin color area of high luminance in Fig. 15.

In both the conventional technique and the present invention, the skin color area in the U-V space changes depending on Y (luminance), and when both U and V of a pixel are included in the skin color area corresponding to the Y (luminance), the pixel is judged to be the skin color.

In the conventional technique, the skin color area is defined by a value of Y (luminance) of a pixel to be determined whether it is a skin color or not. Accordingly, for the pixel (1), the skin color area corresponds to the area of high luminance in Fig. 15, and thus the U and V of the pixel (1) are not included in the area. Therefore, the pixel (1) is judged not to be the skin color. For the pixels (2) to (9), the skin color areas correspond to the area of medium luminance in Fig. 15, and the U and V of each of these pixels are included in the area. Therefore, these pixels are judged to be the skin color.

On the other hand, by the technique according to the present embodiment, when the mean value of Y (luminance) is obtained, Y (luminance) mean = 103, which is used for demarcating the skin color area. Accordingly, the pixel (1) corresponds to the area of medium luminance in Fig. 15, and thus the U and V of the pixel (1) are included in the area. Therefore, the pixel (1) is judged to be the skin color. Likewise for the pixels (2) to (9), the skin color areas correspond to the area of medium luminance in Fig. 15, and the U and V of each of these pixels are included in the area. Therefore, these pixels are also judged to be the skin color.

Accordingly, in the case where an unintended noise occurs in a skin color portion such as a human face, the conventional technique performs image processing on a skin color area and a non-skin color area, in respective different manners (processed individually). On the other hand, by the technique according to the present embodiment, multiple pixels can be image-processed as the same skin color in a similar manner, and thus average brightness of the multiple pixels may be selected depending on the brightness of a scene. As a result, compared with the conventional technique, there is an advantage that noises tend not to be noticeable.

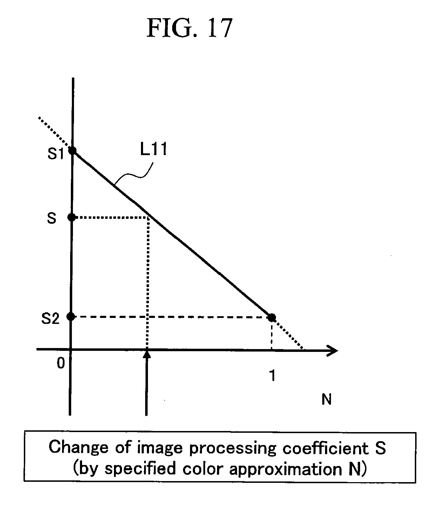

Hereinafter, a more specific embodiment is described. Fig. 16 is a diagram showing a configuration of an overall image processing circuit including the specified color detection circuit 1 shown in Fig. 4. In the image processing circuit shown in Fig. 16, first the specified color detection circuit 1 judges a skin color, and a subsequent image processing coefficient output circuit 41 applies different coefficients of image processing between a skin color and a non-skin color. Specifically, the synthesis of the image processing coefficients is performed linearly according to the value of specified color approximation N, which is an output of the specified color detection circuit 1 (see Fig. 17). Assuming that an ordinary image processing coefficient is S1, and an image processing coefficient for the skin color as a specified color is S2, a final image processing coefficient S is as given by Formula 13. As shown in Fig. 17, according to the input value (arrow) of the specified color approximation N, a coefficient S in a predetermined function L11 can be calculated using the coefficients S1 and S2. The coefficient S is an image processing coefficient which is an output of the image processing coefficient output circuit 41.

[Formula 13]

$$S = (1 - N) \cdot S1 + N \cdot S2 \qquad (13)$$

In this manner, by synthesizing the image processing coefficients S1 and S2, an image can be smoothly displayed on the boundary between the skin color and a non-skin color. By using the image processing coefficient S and an input image signal, for example, an image processing such as saturation correction is performed in the image processing circuit 43, so that an output image can generated. A color a person imagines in his/her mind is called a memory color, and it is generally said that the memory color has a higher saturation than an actual color. Sky blue and vegetable green colors especially have such a strong tendency. However, a human skin color is an exception, and a fair skin color (brightness is high and saturation is low) is more preferable than the actual color. Accordingly, the saturation on a non-skin color area (N = 0) is increased by the specified color approximation N, and a skin color area (0≤N≤1) is image-processed so that the saturation is gradually decreased from the outside of the skin color area to the center of the skin color area. Image processing to correct the hue and brightness may be performed by other image processing circuits. The greater the approximation N, processing adjusted to the specified color is performed more strictly.

In this manner, by combing the above-mentioned specified color detection circuit 1, even in a scene whose luminance changes (such as daytime or nighttime), a skin color area can be appropriately judged.

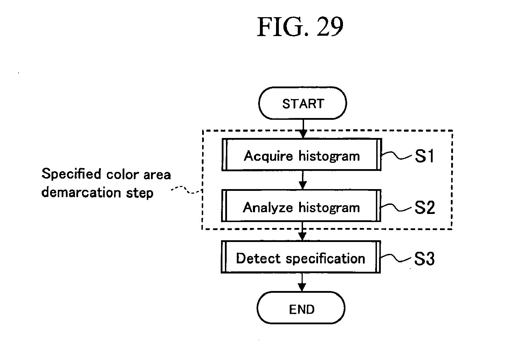

Figs. 29 to 32 are flowcharts showing a flow of specified color detection according to the present embodiment. As shown in Fig. 29, specified color detection processing is started (START) and a histogram is acquired in step S1. For example, an input image size is horizontal size × vertical size = HV_SIZE, and 256 gray levels are divided into 32 stages (1 stage for 8 gray levels), and then a histogram for one screen is acquired. Next, analysis processing of the histogram is performed in step S2. For example, the mean luminance value is obtained, and coefficients for demarcating the specified color (skin color) area are obtained from the specified color coefficient table (feature value). In step S3, specified color detection processing is performed, and the specified color detection processing is terminated (END). A specified color area demarcation step is performed by step S 1 and step S2.

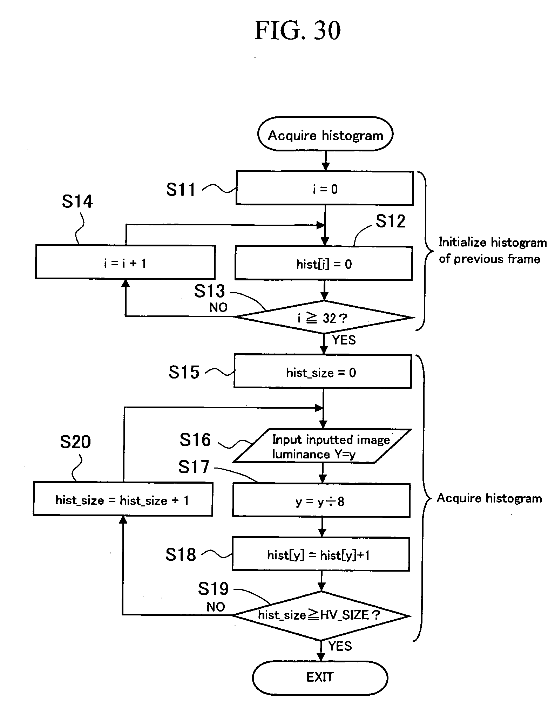

Fig. 30 is a flowchart showing a flow of the histogram acquisition processing (step S1 in Fig. 29). First, in step S14 to step S11, the histogram of the previous frame is initialized. That is to say, i is used for a sequential number of the stage, first, i = 0 in step S11, the frequency of the histogram at the stage i in step S12 is set to 0, and it is determined whether or not i is greater than or equal to 32 in step S13. If i is less than 32 (No), i is incremented by 1 in step S14, and the processing returns to step S12 (the histogram at each stage is initialized). If i is greater than or equal to 32 (initialization of the histograms at 32 stages is terminated) in step S 13 (Yes), a histogram is acquired in step S 15 to step S20.

First, an acquisition size of the histogram is set to "0" in step S15. Next, luminance (Y) of an input image = y is inputted in step S16. In step S17, y = y ÷ W (the first decimal place is truncated), and the frequency in the value of y is incremented by 1 in step S 18. Next, in step S19, it is determined whether or not the size of the current histogram is greater than or equal to the pixel size. If No in step S19, the size of the current histogram is incremented by 1, and the processing returns to step S16. If Yes in step S19, the processing is terminated (in the example, the input image size = histogram acquisition size).

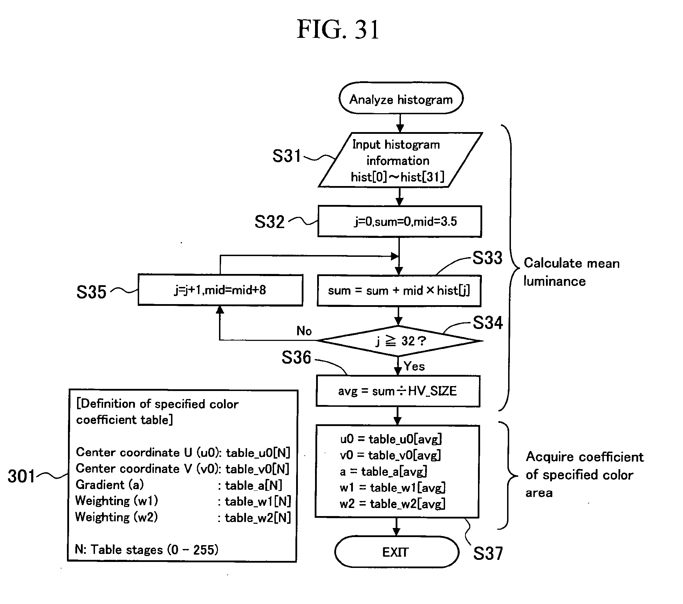

Fig. 31 is a flowchart showing a flow of analysis processing of histogram. In Fig. 31, the mean luminance is calculated in step S31 to step S36, and the coefficient of the specified color area is acquired in step S37.

In step S31, histogram information of 32 stages from 0 to 31 is inputted. In step S32, the number of stages j = 0; a sum of luminance = 0; and the median of each stage is set: mid = 3.5 (mid is 3.5 (the median of the gray levels from 0 to 7) in the histogram at 0 stage, and mid is 11.5 (the median of the gray levels from 8 to 15) in the histogram at the 1st stage). Next in step S33, sum = sum + mid × hist(i) is calculated, and it is judged in step S34 whether or not j is greater than or equal to 32. If No in step S34, the processing proceeds to step S35, and j is incremented by 1, mid is incremented by 8, and then the processing returns to step S33. If j is greater than or equal to 32 (calculation of summing luminance at 32 stages is terminated) in step S34 (Yes), avg = sum ÷ V_SIZE is calculated to obtain the mean luminance value in step S36. Next in step S37, coefficients of the specified color area according to the mean luminance are acquired from the specified color coefficient table (feature value): u0 = table_u0[avg], v0 = table_v0[avg], a = table_a[avg], w1 = table_w1[avg], w2 = table_w2[avg], and then the processing is terminated (EXIT).

The specified color coefficient table (feature value) defines the coefficients, and the definition is as follows (301 in Fig. 31):

Center coordinate U(u0): table_u0[N]
Center coordinate V (v0): table_v0[N]
Gradient(a): table_a[N]
Weighting 1(w1): table_w1[N]
Weighting 2 (w2): table_w2[N]
N: table index number (0 to 255)

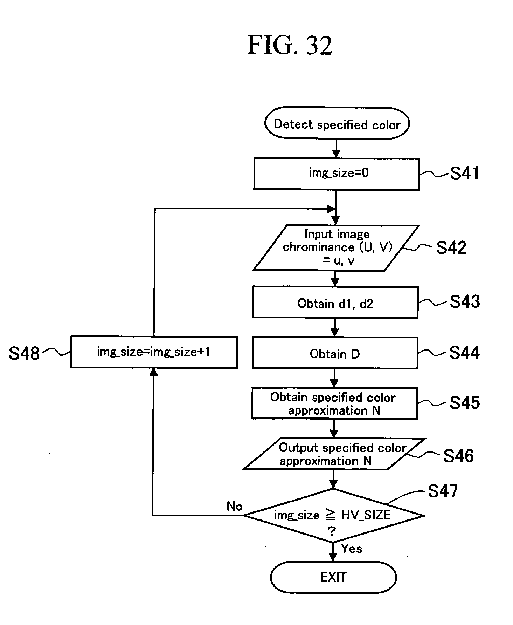

After the coefficients of the specified color area are acquired by the above-mentioned processing, specified color detection processing shown in Fig. 32 is performed. First, in step S41, 0 is assigned to the input image size: img_size = 0 (initialized). Next, in step S42, a chrominance is inputted as an input image: (U, V) = u, v. In step S43, d1 and d2 are calculated based on the following Formula 14.

[Formula 14]

$$d_1 = \frac{|v - v_0 - a(u - u_0)|}{\sqrt{1 + a^2}} \qquad (14)$$

$$d_2 = \frac{|u - u_0 + a(v - v_0)|}{\sqrt{1 + a^2}}$$

Next in step S44, D is obtained based on following Formula 15.

[Formula 15]

$$D = \sqrt{(w_1 d_1)^2 + (w_2 d_2)^2} \qquad (15)$$

Next in step S45, the specified color approximation N is obtained based on the following Formula 16.

[Formula 16]

$$N = \max(1 - D, 0) \qquad (16)$$

Next in step S46, the specified color approximation N is outputted.

Next in step S47, it is determined whether or not img_size ≥ HV_SIZE. If No in step S47, img_size = img_size + 1 in step S48, and the processing returns to step S42. If Yes in step S47, the processing is terminated (EXIT). Thereby, the specified color approximation N can be outputted.

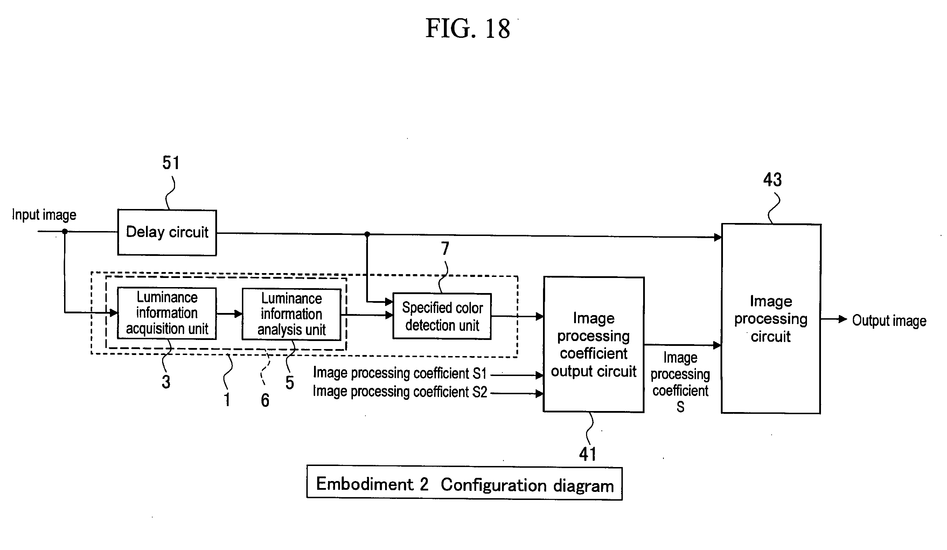

Next, a second embodiment of the present invention is described. An image processing technique according to the present embodiment is an example where the invention is adapted to a moving image. In the case where the image processing technique according to the above-described first embodiment is adapted to a moving image, a histogram with respect to the input image of at least one previous frame is acquired for an input image of the current frame, and analyzed specified color approximation N is reflected. Thus, there is a problem that a time lag occurs. Hence, an image processing circuit shown in Fig. 18 includes: a circuit 1 which is the specified color detection circuit 1 shown in Fig. 4 and has a luminance information (histogram) acquisition unit 3 for multiple pixels, a luminance information (histogram) analysis unit 5 for multiple pixels, and a specified color (skin color) detection unit 7; an image processing coefficient output circuit 41 configured to output an image processing coefficient S upon receipt of a specified color approximation N, an image processing coefficient S1, and an image processing coefficient S2 which are outputs of the circuit 1; and an image processing circuit 43 configured to output an output image upon receipt of an output from a delay circuit 51 for delaying an input image by 1 frame. The luminance information analysis unit 5 for analyzing luminance information of multiple pixels, and the specified color detection unit 7 form a specified color area demarcation circuit 6 for demarcating a specified color area.

Accordingly, as shown in Fig. 18, by adding the delay circuit 51 to delay its input image, the input image of the current frame and reflected specified color approximation N can be synchronized with each other, and thus a moving image can be processed with a high reproducibility of a skin color.

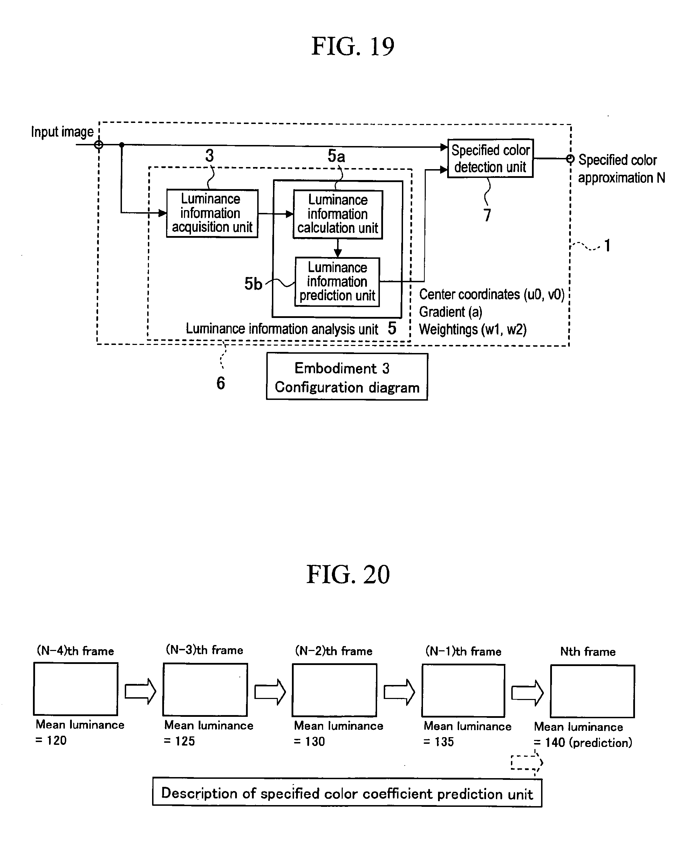

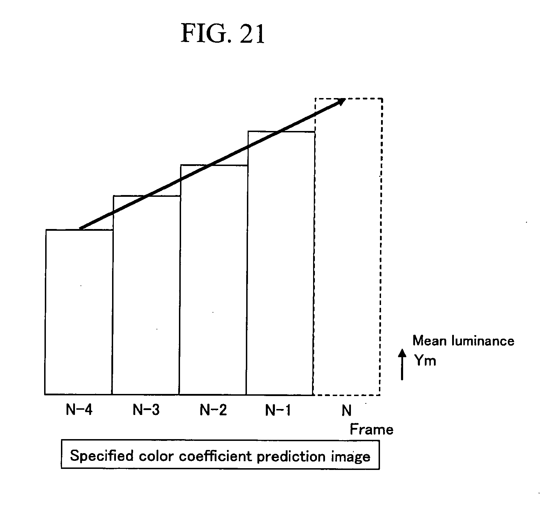

Next, an image processing technique according to a third embodiment of the present invention is described. This technique is also the embodiment which is adapted to a moving image. A configurational difference from the basic specified color detection circuit 1 shown in Fig. 4 is that as shown in Fig. 19, a specified color (skin color) coefficient prediction unit 5b has been added to the luminance information analysis unit 5 to obtain, for example, the mean luminance of the input images of several to one previous frames, and to predict the coefficients of the specified color area to be reflected on the input image of the current frame, and to output the coefficients to the specified color detection unit 7. Fig. 20 is a diagram showing an outline of an operation of the specified color coefficient prediction unit. As shown in Fig. 20, the specified color (skin color) coefficient prediction unit 5b stores information on the mean luminance in a memory or the like from an input image of 4 previous frame from the current frame N (the (N-4)th frame) in the example of Fig. 20, predicts the mean luminance (140 in the figure) of the input image of the current frame N, and outputs the coefficients of the specified color area depending on the luminance to the specified color detection unit. Fig. 21 is a diagram showing an image of the mean luminance Ym from the (N-4)th frame to the Nth frame. In general, prediction is made so as to smoothly connect a trend which changes as the frame advances,.

By doing so, in the case where the invention is adapted to a moving image, because the specified color approximation N based on the mean luminance of the input image of at least one previous frame is used for the input image of the current frame, a slight time lag occurs. However, because the specified color approximation N is obtained by prediction, there is an advantage that the specified color area can be more appropriately judged. Furthermore, unlike the configuration according to the second embodiment, the delay circuit is not needed, and thus there is an advantage that the circuit size can be reduced.

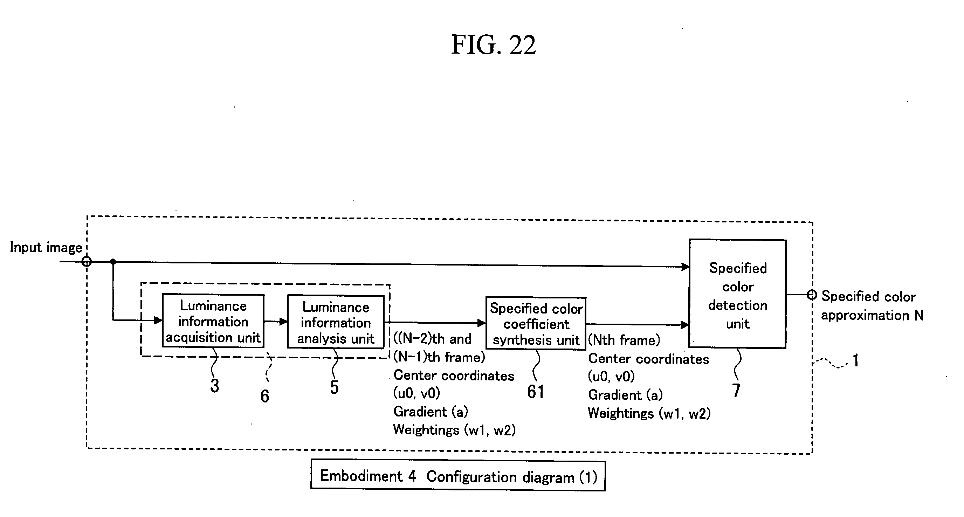

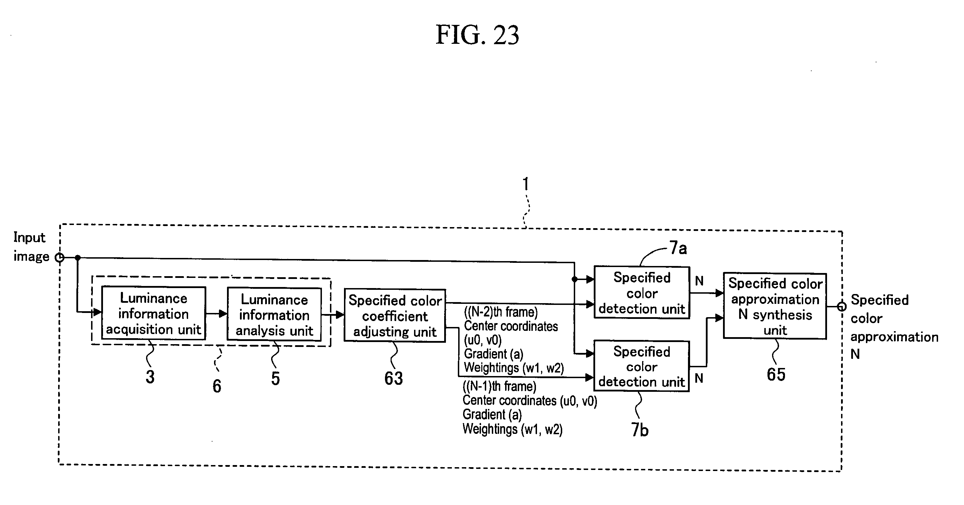

Next, an example is shown where an image processing technique according to a fourth embodiment of the present invention is adapted to a moving image. Figs. 22 and 23 are diagrams showing an exemplary configuration of the specified color detection circuit 1 in an image processing circuit according to the present embodiment. The specified color detection circuit 1 shown in Figs. 22 and 23 has a configuration in which a specified color coefficient synthesis unit 61 is added between the luminance information analysis unit 5 and the specified color detection units 7 in the circuit shown in Fig. 4. The luminance information analysis unit 5 for analyzing luminance information of multiple pixels, and the specified color detection unit 7 form a specified color area demarcation circuit 6 for demarcating a specified color area.

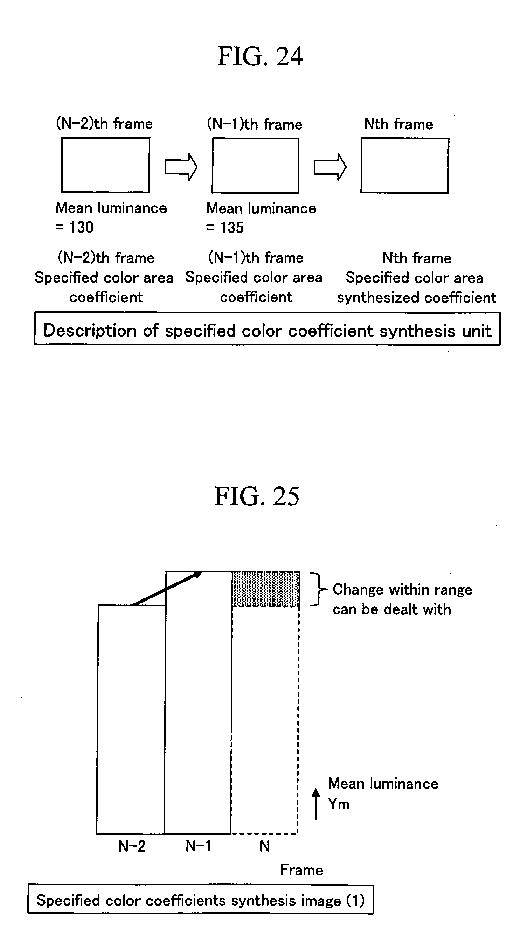

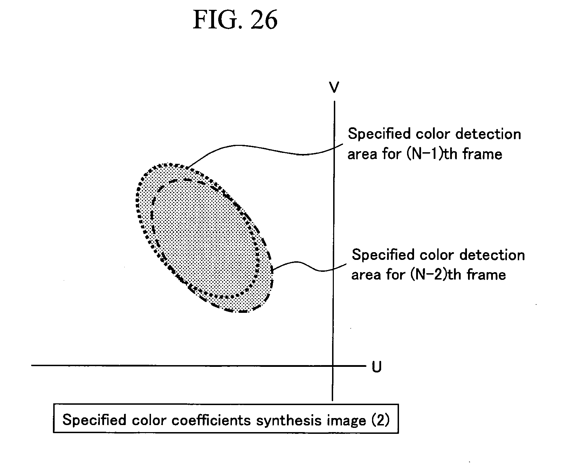

As shown by an example in Figs. 24 and 25, the specified color coefficient synthesis unit 61 synthesizes the coefficients of the specified color area for the input images of the (N-2)th frame and the (N-1)th frame so as to output the synthesized coefficient as the coefficient of the specified color area of the Nth frame to the specified color detection unit 7. With such a configuration, an area can be demarcated so as to include both the skin color areas corresponding to the (N-2)th frame and the (N-1)th frame as shown in Fig. 26, and thus within a change from the (N-2)th to the (N-1)th frame, the skin color area can be adjusted to the change.

In the configuration shown in Fig. 22, the coefficients of the specified color (skin color) area are synthesized by the specified color coefficient synthesis unit 61. In contrast in the configuration shown in Fig. 23, two specified color detection units 7a, 7b are used, and the coefficients of the specified color area for the (N-2)th frame and the (N-1)th frame are outputted to the specified color detection units 7a, 7b, respectively by the specified color coefficient adjusting unit 63. In addition, the specified color approximations N of the (N-2)th frame and the (N-1)th frame are synthesized by the specified color approximation N synthesis unit. The specified color coefficient adjusting unit 63 is a timing adjusting circuit configured to output the coefficients of the specified color area for the (N-2)th frame and the (N-1)th frame at a timing synchronized to the Nth frame.

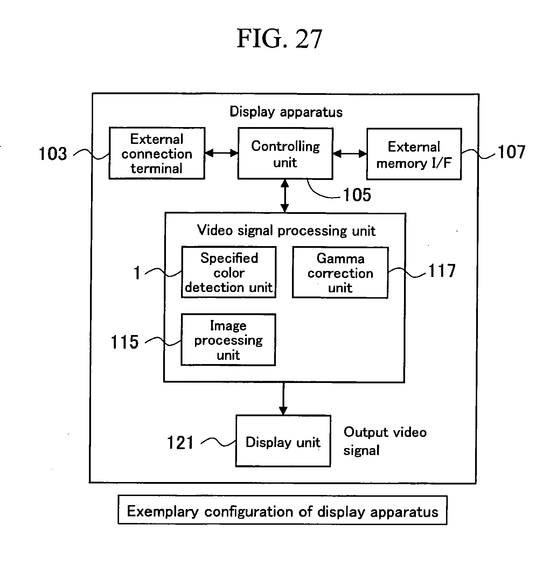

Next, an exemplary application to a system of an image processing circuit according to the present embodiment is described. Fig. 27 is a diagram showing an exemplary configuration of a display apparatus using the specified color detection unit 1 utilizing the image processing technique according to the present embodiment. The display apparatus shown in Fig. 27 includes a controlling unit 105, a video signal processing unit 111, a display apparatus 121, and further includes an external connection terminal 103, and an external memory I/F unit 107. The video signal processing unit 111 includes the specified color detection unit 1 according to the present embodiment, an image processing unit 115, and a gamma correction unit 117, so that the specified color (skin color) can be reproduced favorably.

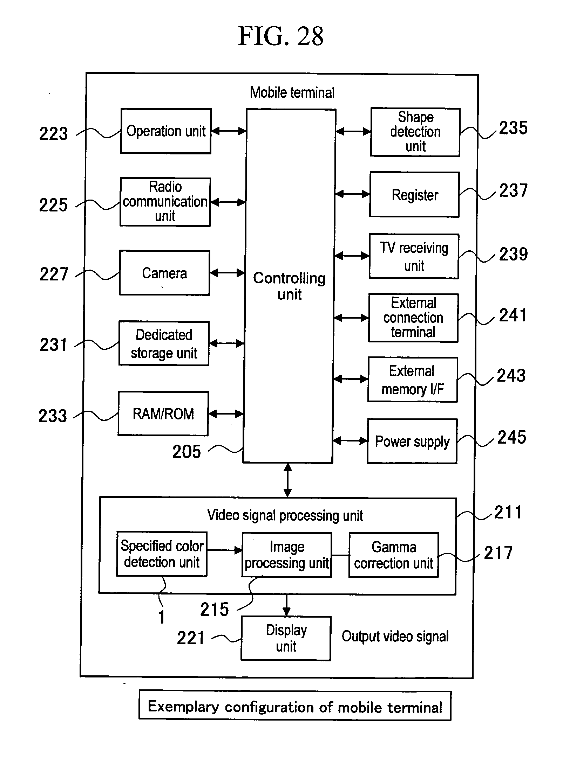

Fig. 28 is a diagram showing an exemplary application of the image processing technique according to the present embodiment to a mobile terminal. Provided is a mobile terminal 201 including a video signal processing unit 211, a display apparatus 221, and a controlling unit 205, the video signal processing unit 211 having a specified color demarcating unit 1 according to the present embodiment, an image processing unit 215, and a gamma correction unit 217. The controlling unit 205 controls an operation unit 223 of the mobile terminal 201, a radio communication unit 225, a camera 227, a dedicated storage unit 231, a RAM/ROM 233, a shape detection unit 235 for detecting the shape of a mobile terminal, a register 237, a TV receiving unit 239, an external connection terminal 241, an external memory I/F 243, a power supply 245, and the above-mentioned video signal processing unit 211. That is to say, when a still image and a moving image acquired by the camera 227, a broadcast content acquired by the TV receiving unit 239, content data acquired from the radio communication unit 225, the external memory I/F 243 or the like, and the like are displayed on the display apparatus 221, luminance dependence of the specified color (skin color) can be adjusted in a favorable manner.

In addition, the present invention may be used for various electronic equipment such as a digital broadcasting receiving device and a personal computer. Also, in the above-mentioned embodiments, the configurations shown in the accompanying drawings are not limited to those, and can be modified as needed within the range of exerting the effects of the present invention. In addition, the invention may be modified as needed and implemented without departing from the scope of the object of the present invention.

Further, a program to achieve the functions described in the present embodiments may be recorded in a computer-readable medium to perform the processing of each unit, by causing a computer system to read and execute the program recorded in the recording medium. The "computer system" referred to herein includes hardware for an OS and peripheral devices.

Also, the "computer system" includes a homepage providing environment (or display environment) when the WWW system is used.

Also the "computer-readable medium" refers to a portable medium such as a flexible disk, a magnetic optical disk, a ROM, or a CD-ROM, or a storage device such as a hard disk built in a computer system. Further, the "computer-readable medium" includes a medium, which holds a program dynamically for a short time period, such as a communication line in a case where a program is transmitted via a network such as the Internet, or a communication line such as a telephone line, as well as a medium, which holds a program for a certain time period, such as a volatile memory inside a computer system serving as a server or a client. The above-mentioned program may be one for achieving a part of the functions described above, or may be one which can achieve the functions described above in combination with a program already recorded in the computer system.

INDUSTRIAL APPLICABILITY

The present invention can be utilized as an image processing apparatus.

**Claims**

1. A specified color area demarcation circuit **characterized by** comprising:

    a luminance information acquisition unit configured to acquire luminance distribution information of a plurality of pixels included in an input image; and
    a luminance information analysis unit configured to obtain a feature value according to the luminance information of the plurality of pixels based on the luminance information of the plurality of pixels acquired by the luminance information acquisition unit, and to obtain a coefficient for demarcating a specified color area in a color space of the input image according to luminance based on the feature value.

2. The specified color area demarcation circuit according to claim 1,
    **characterized in that**
    the luminance information acquisition unit acquires a histogram indicating a relationship between a certain gray level range of luminance values and a frequency which is a total number of pixels having the luminance value, and the luminance information analysis unit obtains the feature value of the histogram based on the histogram, and obtains the coefficient based on the feature value.

3. A specified color detection circuit **characterized by** comprising a specified color detection unit configured to obtain an approximation by using the specified color area demarcated based on the coefficient obtained by the luminance information analysis unit according to any one of claims 1 and 2, and to output the approximation.

4. The specified color detection circuit according to claim 3, **characterized in that**
the specified color detection unit includes, as the coefficient, the center of the specified color area, a gradient thereof, and a length thereof from the center; and
the specified color detection unit determines a first characteristics axis passing through the center and having the gradient in the color space and a second characteristics axis passing through the center and being orthogonal to the first characteristics axis, demarcates the specified color area based on the size from the center, and obtains the approximation.

5. The specified color detection circuit according to claim 4, **characterized in that** the specified color area is approximated by an ellipse which includes any one of the first characteristics axis and the second characteristics axis as a major axis and includes the other characteristics axis as a minor axis.

6. The specified color detection circuit according to claim 4, **characterized in that** the specified color area is approximated by a rhombus which includes the first characteristics axis and the second characteristics axis as diagonals of the rhombus.

7. The specified color detection circuit according to any one of claims 3 to 6, **characterized in that** the closer to the center of the specified color area, the higher the approximation, and the farther from the center of the specified color area, the lower the approximation.

8. An image processing apparatus **characterized by** comprising:

a specified color detection circuit according to any one of claims 3 to 7;
an image processing coefficient output circuit configured to receive the approximation outputted from the specified color detection circuit and to output different image processing coefficients for the specified color and a non-specified color, respectively, according the inputted approximation,
an image processing circuit configured to output an output image signal based on an image processing coefficient outputted from the image processing coefficient output circuit, and an input image signal.

9. The image processing apparatus according to claim 8, **characterized in that** the image processing coefficient is proportional to the approximation.

10. The image processing apparatus according to any one of claims 8 and 9,
**characterized by** further comprising a delay circuit configured to delay the input image to be inputted to the image processing circuit.

11. The image processing apparatus according to any one of claims 8 to 10,
**characterized in that** the luminance information analysis unit is provided with a specified color coefficient prediction unit configured to predict a coefficient for demarcating the specified color area of a current frame based on luminance information of a plurality of pixels of the input image of several to one previous frames.

12. The image processing apparatus according to any one of claims 8 to 10,
**characterized in that** a specified color coefficient synthesis unit is provided between the luminance information analysis unit and the specified color detection unit, the specified color coefficient synthesis unit configured to obtain a coefficient for demarcating the specified color area in a current Nth frame by synthesizing coefficients for demarcating the specified color areas in (N-2)th frame and (N-1)th frame.

13. A display apparatus **characterized by** comprising the image processing apparatus according to any one of claims 8 to 12.

14. An electronic instrument **characterized by** comprising the display apparatus according to claim 13.

15. A method for defining a specified color area **characterized by** comprising:

a luminance information acquisition step of acquiring luminance distribution information of a plurality of pixels contained in an input image; and

a luminance information analysis step of obtaining a feature value according to the luminance information of the plurality of pixels based on the luminance information of the plurality of pixels acquired in the luminance information acquisition step, and of obtaining a coefficient for demarcating a specified color area in a color space of the input image according to luminance based on the feature value.

16. A method for detecting a specified color **characterized by** comprising a specified color detection step of: obtaining an approximation by using the specified color area demarcated by the coefficient obtained in the luminance information analysis step according to claim 15; and outputting the approximation.

17. A program for causing a computer to execute the method according to any one of claims 15 and 16.

FIG. 1

Skin color distribution (Chrominance U – Chrominance V)

# FIG. 2

Skin color distribution (Chrominance V – Luminance Y)

# FIG. 3

Skin color distribution (Chrominance V – Luminance Y)

EP 2 352 123 A1

# FIG. 4

Input image

Luminance information

Center coordinates (u0, v0)
Gradient (a)
Weightings (w1, w2)

Luminance information acquisition unit 3

Luminance information analysis unit 5

Specified color detection unit 7

Specified color approximation N

1

6

# FIG. 5

The number
of pixels

Luminance Y

Luminance information acquisition unit
(Histogram acquisition)

# FIG. 6

| Mean (luminance) value | Center coordinate U (u0) | Center coordinate V (v0) | Gradient (a) | Weighting 1 (w1) | Weighting 2 (w2) |
|---|---|---|---|---|---|
| 255 | | | | | |
| ... | | | | | |
| 210 | −14 | 20 | 0.93 | 12.3 | 19.4 |
| ... | | | | | |
| 150 | −19 | 27 | 0.84 | 8.4 | 17.9 |
| ... | | | | | |
| 100 | −18 | 28 | 0.78 | 8.4 | 17.9 |
| ... | | | | | |
| 60 | −12 | 18 | 0.94 | 12.3 | 19.4 |
| ... | | | | | |
| 30 | −6 | 9 | 0.75 | 16.8 | 40.3 |
| ... | | | | | |
| 0 | | | | | |

Luminance information analysis unit (Coefficient table)

# FIG. 7

Characteristics axis L2

Specified color area 21

Po(uo, vo)

b2

b1

U

V

Characteristics axis L1

Description of specified color area judgment (calculation) method (1)

# FIG. 8

Major diameter

Minor diameter

Minor axis

Major axis

# FIG. 9

Description of specified color area judgment (calculation) method (2)

# FIG. 10

Description of specified color area judgment (calculation) method (3)

# FIG. 11

Description of specified color area judgment (calculation) method (4)

# FIG. 12

Description of specified color area judgment (calculation) method (5)

# FIG. 13

Characteristics axis L2''

V

Specified color area

U

Characteristics axis L1''

Description of specified color area judgment (calculation) method (6)

# FIG. 14

(Example) Skin color image 3 × 3

|  | Y | U | V |  | Y | U | V |  | Y | U | V |  |
|-----|-----|-----|-----|-----|-----|-----|-----|-----|-----|-----|-----|---|
| (1) | 144 | −16 | 23 | (2) | 101 | −14 | 18 | (3) | 97 | −14 | 22 | Y: Luminance |
| (4) | 99 | −14 | 22 | (5) | 97 | −12 | 22 | (6) | 105 | −14 | 23 | U, V: Chrominance |
| (7) | 91 | −17 | 26 | (8) | 96 | −12 | 19 | (9) | 101 | −15 | 20 |  |

(1):Noise pixel (only Y value is significantly different and U and V values are not so different)

(2)~(9):Skin color pixels

Y mean: (144+101+97+99+97+105+91+96+101)/9=103

# FIG. 15

Luminance: High

Luminance : Medium

V

Luminance: Low

Y=103

U

Graph showing in U-V space indicating difference
in skin color areas depending on luminance

# FIG. 16

Input image

Specified color
detection circuit

1

N

Image processing coefficient S1

Image processing coefficient S2

Image
processing
coefficient
output circuit

41

Image
processing
coefficient
S

Image
processing
circuit

43

Output image

Embodiment 1  Configuration diagram

# FIG. 17

Change of image processing coefficient S
(by specified color approximation N)

# FIG. 18

Input image → **Delay circuit** (51)

Luminance information acquisition unit (3) → Luminance information analysis unit (5) → Specified color detection unit (7)

(1) (6)

Image processing coefficient S1 →
Image processing coefficient S2 →

**Image processing coefficient output circuit** (41) → Image processing coefficient S

**Image processing circuit** (43) → Output image

Embodiment 2  Configuration diagram

EP 2 352 123 A1

# FIG. 19

Embodiment 3
Configuration diagram

# FIG. 20

Description of specified color coefficient prediction unit

# FIG. 21

Mean luminance
Ym

N-4  N-3  N-2  N-1  N
Frame

Specified color coefficient prediction image

# FIG. 22

EP 2 352 123 A1

Input image

Specified color detection unit → Specified color approximation N

Luminance information acquisition unit → Luminance information analysis unit → ((N−2)th and (N−1)th frame)
Center coordinates (u0, v0)
Gradient (a)
Weightings (w1, w2)

Specified color coefficient synthesis unit → (Nth frame)
Center coordinates (u0, v0)
Gradient (a)
Weightings (w1, w2)

3
6
5
61
7
1

Embodiment 4  Configuration diagram (1)

FIG. 23

EP 2 352 123 A1

## FIG. 24

(N−2)th frame

(N−1)th frame

Nth frame

Mean luminance
= 130

Mean luminance
= 135

(N−2)th frame
Specified color area
coefficient

(N−1)th frame
Specified color area
coefficient

Nth frame
Specified color area
synthesized coefficient

Description of specified color coefficient synthesis unit

## FIG. 25

Change within range
can be dealt with

Mean luminance
$Y_m$

N−2    N−1    N

Frame

Specified color coefficients synthesis image (1)

# FIG. 26

Specified color detection area for (N-1)th frame

Specified color detection area for (N-2)th frame

Specified color coefficients synthesis image (2)

# FIG. 27

```
                    Display apparatus
  External              Controlling          External
103  connection          unit                memory I/F    107
     terminal                                
                                105

              Video signal processing unit
  1    Specified          Gamma
       color              correction    117
       detection unit     unit

 115   Image
       processing
       unit

 121   Display unit    Output video
                       signal
```

Exemplary configuration of display apparatus

## FIG. 28

Exemplary configuration of mobile terminal

Mobile terminal

223 — Operation unit

225 — Radio communication unit

227 — Camera

231 — Dedicated storage unit

233 — RAM/ROM

205 — Controlling unit

235 — Shape detection unit

237 — Register

239 — TV receiving unit

241 — External connection terminal

243 — External memory I/F

245 — Power supply

211 — Video signal processing unit

217 — Specified color detection unit → Image processing unit → Gamma correction unit

1

215

221 — Display unit

Output video signal

# FIG. 29

```
                          ┌─────────────┐
                          │    START    │
                          └──────┬──────┘
        ┌ ─ ─ ─ ─ ─ ─ ─ ─ ─ ─ ─ ▼─ ─ ─ ─ ─ ─ ─ ─ ┐
                          ┌─────────────────┐
        │                 │ Acquire histogram │  ～S1  │
                          └────────┬────────┘
        │                          ▼                   │
Specified color area      ┌─────────────────┐
demarcation step          │ Analyze histogram │  ～S2  │
                          └────────┬────────┘
        └ ─ ─ ─ ─ ─ ─ ─ ─ ─ ─ ─ ─ ▼─ ─ ─ ─ ─ ─ ─ ─ ┘
                          ┌──────────────────┐
                          │ Detect specification │ ～S3
                          └────────┬─────────┘
                                   ▼
                          ┌─────────────┐
                          │     END     │
                          └─────────────┘
```

# FIG. 30

```
                    ┌─────────────────────┐
                    │  Acquire histogram  │
                    └─────────────────────┘
                               │
                               ▼
        S11 ┐         ┌─────────────────────┐  ╲
            │         │      i = 0          │   │
                      └─────────────────────┘   │
                               │                │
  S14 ┐                        ▼    ┌─ S12      │
      │                ┌──────────────┐         │  Initialize histogram
  ┌──────────────┐     │  hist[i] = 0 │         │  of previous frame
  │  i = i + 1   │──▶   └──────────────┘        │
  └──────────────┘             │                │
        ▲         S13 ┐        ▼                │
        │          NO   ◇─────────────◇         │
        └───────────────│   i ≧ 32 ?  │        ╱
                        ◇─────────────◇
                               │ YES
                               ▼
        S15 ┐         ┌─────────────────────┐  ╲
            │         │   hist_size = 0     │   │
                      └─────────────────────┘   │
                               │                │
  S20 ┐         S16 ┐          ▼                │
      │             │   ╱────────────────╱      │
                      │ Input inputted image│   │
  ┌──────────────────┐ │ luminance Y=y      │   │
  │ hist_size =       │╱────────────────╱     │
  │ hist_size + 1    │   S17 ┐   │              │  Acquire histogram
  └──────────────────┘       │   ▼              │
        ▲                 ┌──────────────┐      │
        │                 │  y = y ÷ 8   │      │
        │                 └──────────────┘      │
        │          S18 ┐        │               │
        │              │        ▼               │
        │          ┌───────────────────┐        │
        │          │ hist[y] = hist[y]+1│       │
        │          └───────────────────┘        │
        │      S19 ┐        │                   │
        │       NO   ◇──────────────────◇       │
        └────────────│ hist_size≧HV_SIZE?│     ╱
                     ◇──────────────────◇
                            │ YES
                            ▼
                    ┌─────────────┐
                    │    EXIT     │
                    └─────────────┘
```

# FIG. 31

```
              ( Analyze histogram )
                       │
                       ▼
S31      ╱  Input histogram        ╱ ┐
         ╱   information          ╱  │
         ╱  hist[0]~hist[31]     ╱   │
                       │             │
                       ▼             │
S32   ┌──────────────────────────┐  │
      │     j=0,sum=0,mid=3.5     │  │
      └──────────────────────────┘  │  Calculate mean
                       │          S33│  luminance
         ┌─────────────┤             │
         │             ▼             │
S35 ┌──────────────┐ ┌────────────────────────┐│
    │ j=j+1,mid=mid+8│ │ sum = sum + mid × hist[j]││
    └──────────────┘ └────────────────────────┘│
         ▲                   │        S34       │
         │          No       ▼                  │
         └──────────◇  j ≧ 32 ?  ◇──────────────┘
            S36              │ Yes
                             ▼
      ┌──────────────────────────┐
      │     avg = sum ÷ HV_SIZE   │
      └──────────────────────────┘
```

┌────────────────────────────────────┐
│ [Definition of specified color      │
│ coefficient table]                  │
│                                     │
│ Center coordinate U (u0): table_u0[N]│
│ Center coordinate V (v0): table_v0[N]│
301 │ Gradient (a)           : table_a[N] │
│ Weighting (w1)         : table_w1[N]│
│ Weighting (w2)         : table_w2[N]│
│                                     │
│ N: Table stages (0 – 255)           │
└────────────────────────────────────┘

```
      ┌──────────────────────────┐ ┐
      │   u0 = table_u0[avg]      │ │
      │   v0 = table_v0[avg]      │ │ Acquire coefficient
      │   a = table_a[avg]        │ │ of specified color
      │   w1 = table_w1[avg]      │ │ area
      │   w2 = table_w2[avg]      │ │
      └──────────────────────────┘ │
                    │              ┘
                    ▼
             (    EXIT    )  S37
```

EP 2 352 123 A1

FIG. 32

```
        ( Detect specified color )
                    │
        ┌───────────────────────┐
        │      img_size=0        │──── S41
        └───────────────────────┘
                    │
    ┌──────────────►│
    │      ┌─────────────────────┐
    │     / Input image          /
    │    / chrominance (U, V)    /──── S42
    │   /      = u, v           /
    │      └─────────────────────┘
    │                │
    │      ┌─────────────────────┐
    │      │     Obtain d1, d2    │──── S43
    │      └─────────────────────┘
    │                │
┌───────────────┐    ┌─────────────────────┐
│img_size=img_size+1│ │     Obtain D        │──── S44
└───────────────┘    └─────────────────────┘
 S48            │                │
                │      ┌─────────────────────┐
                │      │ Obtain specified color│──── S45
                │      │    approximation N   │
                │      └─────────────────────┘
                │                │
                │      ┌─────────────────────┐
                │     / Output specified color/──── S46
                │    /  approximation N      /
                │      └─────────────────────┘
                │                │
                │              ╱─────────────╲  S47
                │   No        ╱img_size ≧ HV_SIZE╲
                └────────────◄       ?          ►
                              ╲─────────────╱
                                    │ Yes
                              (   EXIT   )
```

40

# FIG. 33

R-Y

B-Y

Y

Memory ~503

505

Comparator

501

Configuration diagram (Conventional technique)

$$(B-Y)\times\tan(\theta+\beta)\leq(R-Y)\leq(B-Y)\times\tan(\theta+\beta) \quad \text{(Formula (1))}$$

$$r-s\leq\{(R-Y)^2+(B-Y)^2\}^{\frac{1}{2}}\leq r+s \quad \text{(Formula (2))}$$

$$r=K1\times Y \quad \text{Where K1} \geq 0, \text{K1 is a constant} \quad \text{(Formula (3))}$$

$$s=K2\times Y \quad \text{Where K2} \geq 0, \text{K2 is a constant} \quad \text{(Formula (4))}$$

# FIG. 34

R−Y=

| | 15 | 14 | 13 | 12 | 11 | 10 | 9 | 8 | 7 | 6 | 5 | 4 | 3 | 2 | 1 | 0 |
|---|----|----|----|----|----|----|----|----|----|----|----|----|----|----|----|----|
| 15 | 15 | 0 | 0 | 0 | 0 | 0 | 0 | 0 | 0 | 0 | 0 | 0 | 0 | 0 | 0 | 0 |
| 14 | 14 | 14 | 0 | 0 | 0 | 0 | 0 | 0 | 0 | 0 | 0 | 0 | 0 | 0 | 0 | 0 |
| 13 | 13 | 13 | 13 | 0 | 0 | 0 | 0 | 0 | 0 | 0 | 0 | 0 | 0 | 0 | 0 | 0 |
| 12 | 12 | 12 | 12 | 12 | 0 | 0 | 0 | 0 | 0 | 0 | 0 | 0 | 0 | 0 | 0 | 0 |
| 11 | 12 | 11 | 11 | 11 | 11 | 0 | 0 | 0 | 0 | 0 | 0 | 0 | 0 | 0 | 0 | 0 |
| 10 | 11 | 11 | 10 | 10 | 10 | 10 | 0 | 0 | 0 | 0 | 0 | 0 | 0 | 0 | 0 | 0 |
| 9 | 10 | 10 | 10 | 9 | 9 | 9 | 9 | 0 | 0 | 0 | 0 | 0 | 0 | 0 | 0 | 0 |
| 8 | 10 | 9 | 9 | 9 | 8 | 8 | 8 | 8 | 0 | 0 | 0 | 0 | 0 | 0 | 0 | 0 |
| 7 | 9 | 9 | 8 | 8 | 8 | 7 | 7 | 7 | 7 | 0 | 0 | 0 | 0 | 0 | 0 | 0 |
| 6 | 9 | 9 | 8 | 7 | 7 | 7 | 6 | 6 | 6 | 6 | 0 | 0 | 0 | 0 | 0 | 0 |
| 5 | 8 | 8 | 7 | 7 | 6 | 6 | 6 | 5 | 5 | 5 | 5 | 0 | 0 | 0 | 0 | 0 |
| 4 | 0 | 0 | 0 | 6 | 6 | 6 | 5 | 5 | 4 | 4 | 4 | 4 | 0 | 0 | 0 | 0 |
| 3 | 0 | 0 | 0 | 0 | 0 | 0 | 5 | 4 | 4 | 3 | 3 | 3 | 3 | 0 | 0 | 0 |
| 2 | 0 | 0 | 0 | 0 | 0 | 0 | 0 | 0 | 0 | 3 | 3 | 2 | 2 | 2 | 0 | 0 |
| 1 | 0 | 0 | 0 | 0 | 0 | 0 | 0 | 0 | 0 | 0 | 0 | 0 | 1 | 1 | 1 | 0 |
| 0 | 0 | 0 | 0 | 0 | 0 | 0 | 0 | 0 | 0 | 0 | 0 | 0 | 0 | 0 | 0 | 0 |

−(B−Y)= 15 14 13 12 11 10 9 8 7 6 5 4 3 2 1 0

Low Y

Diagram showing table for skin color detection

FIG. 35

(a)

Diagram indicating skin color area
(Conventional technique)

(b)

Diagram indicating skin color area
(Conventional technique)

(c)

Diagram indicating skin color area
(Conventional technique)

(d)

Diagram indicating skin color area
(Conventional technique)

<table>
<tr><td colspan="2" align="center">**INTERNATIONAL SEARCH REPORT**</td><td>International application No.<br>PCT/JP2009/068272</td></tr>
</table>

| A. CLASSIFICATION OF SUBJECT MATTER |
|---|
| *G06T7/00*(2006.01)i, *G06T1/00*(2006.01)i, *H04N1/46*(2006.01)i, *H04N1/60*(2006.01)i, *H04N9/64*(2006.01)i |
| According to International Patent Classification (IPC) or to both national classification and IPC |

| B. FIELDS SEARCHED |
|---|
| Minimum documentation searched (classification system followed by classification symbols)<br>G06T7/00, G06T1/00, H04N1/46, H04N1/60, H04N9/64 |
| Documentation searched other than minimum documentation to the extent that such documents are included in the fields searched<br>Jitsuyo Shinan Koho 1922-1996 Jitsuyo Shinan Toroku Koho 1996-2009<br>Kokai Jitsuyo Shinan Koho 1971-2009 Toroku Jitsuyo Shinan Koho 1994-2009 |
| Electronic data base consulted during the international search (name of data base and, where practicable, search terms used) |

| C. DOCUMENTS CONSIDERED TO BE RELEVANT |

| Category* | Citation of document, with indication, where appropriate, of the relevant passages | Relevant to claim No. |
|---|---|---|
| A | JP 2007-264860 A (Victor Company Of Japan, Ltd.),<br>17 October 2007 (17.10.2007),<br>claim 1<br>(Family: none) | 1-17 |
| A | JP 2004-192129 A (Fuji Photo Film Co., Ltd.),<br>08 July 2004 (08.07.2004),<br>claim 1; fig. 7<br>(Family: none) | 1-17 |
| A | JP 2005-250596 A (Fuji Xerox Co., Ltd.),<br>15 September 2005 (15.09.2005),<br>fig. 11; paragraph [0041]<br>(Family: none) | 1-17 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>14 December, 2009 (14.12.09) | Date of mailing of the international search report<br>22 December, 2009 (22.12.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| | International application No. |
|---|---|
| | PCT/JP2009/068272 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-183729 A  (Eastman Kodak Co.),<br>28 June 2002 (28.06.2002),<br>fig. 4; paragraph [0026]<br>& US 6711286 B1      & EP 1211638 A2 | 1-17 |
| A | JP 2008-252475 A  (Mitsubishi Electric Corp.),<br>15 October 2008 (15.10.2008),<br>fig. 6; paragraph [0044]<br>(Family: none) | 1-17 |
| A | JP 2002-157596 A  (Sony Corp.),<br>31 May 2002 (31.05.2002),<br>fig. 10; paragraph [0099]<br>& US 2003/0059092 A1    & US 2007/0122012 A1<br>& WO 2002/041254 A1 | 1-17 |
| E,A | JP 2009-290661 A  (Seiko Epson Corp.),<br>10 December 2009 (10.12.2009),<br>fig. 6; paragraphs [0030] to [0031]<br>(Family: none) | 1-17 |

Form PCT/ISA/210 (continuation of second sheet) (April 2007)

## REFERENCES CITED IN THE DESCRIPTION

**Patent documents cited in the description**

- JP HEI11146405 B

- JP 2008295786 A